(19) Europäisches Patentamt
European Patent Office
Office européen des brevets

(11) **EP 4 422 317 A1**

(12) **EUROPEAN PATENT APPLICATION**
published in accordance with Art. 153(4) EPC

(43) Date of publication:
**28.08.2024 Bulletin 2024/35**

(21) Application number: **22897860.7**

(22) Date of filing: **23.11.2022**

(51) International Patent Classification (IPC):
**H04W 72/04** (2023.01)

(52) Cooperative Patent Classification (CPC):
**G06N 3/0464; G06N 3/084; G06N 20/00;
G06N 20/20; H04W 72/04; H04W 72/044;
H04W 72/542**

(86) International application number:
**PCT/CN2022/133822**

(87) International publication number:
**WO 2023/093777 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.11.2021 CN 202111404979**

(71) Applicant: **Huawei Technologies Co., Ltd.
Shenzhen, Guangdong 518129 (CN)**

(72) Inventors:
• **SUN, Yan**
**Shenzhen, Guangdong 518129 (CN)**
• **CHAI, Xiaomeng**
**Shenzhen, Guangdong 518129 (CN)**
• **SUN, Yaqi**
**Shenzhen, Guangdong 518129 (CN)**
• **WU, Yiqun**
**Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **COMMUNICATION METHOD AND APPARATUS**

(57) This application provides a communication method and apparatus. The method includes: determining a first downlink signal and a second downlink signal, where the first downlink signal is a downlink signal determined based on an output of a first prediction model, an input of the first prediction model is determined based on Y pieces of downlink measurement information in X pieces of downlink measurement information, and the second downlink signal is determined based on the X pieces of downlink measurement information; and indicating the second downlink signal and the Y pieces of downlink measurement information to an access network device if the first downlink signal and the second downlink signal meet a first condition. According to the method, when the predicted first downlink signal is inconsistent, due to a channel environment change or the like, with the second downlink signal determined by a terminal device based on the actual downlink measurement information, the terminal device may feed back the second downlink signal and the Y pieces of downlink measurement information to the access network device, so that the first prediction model can be updated based on the foregoing information, and performance of the prediction model can be continuously improved.

FIG. 7

**Description**

**CROSS-REFERENCE TO RELATED APPLICATION**

This application claims priority to Chinese Patent Application No. 202111404979.5, filed with the China National Intellectual Property Administration on November 24, 2021 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

In a wireless communication network, for example, in a mobile communication network, services supported by the network are increasingly diversified, and therefore requirements that need to be met are increasingly diversified. For example, the network needs to be able to support ultra-high rates, ultra-low latency, and/or ultra-large connections. This feature makes network planning, network configuration, and/or resource scheduling increasingly complex. In addition, because a network function is increasingly powerful, for example, supporting an increasingly high spectrum and supporting new technologies such as a high-order multiple-input multiple-output (multiple-input multiple-output, MIMO) technology, beamforming, and/or beam management, network energy saving becomes a hot research topic. These new requirements, scenarios, and features bring unprecedented challenges to network planning, operations and maintenance, and efficient operation. To meet this challenge, an artificial intelligence technology may be introduced into the wireless communication network, to implement network intelligence. On this basis, how to effectively implement artificial intelligence in a network is a problem worth studying.

**SUMMARY**

This application provides a communication method and apparatus, to update a prediction model based on a channel environment, to improve communication performance.

According to a first aspect, this application provides a communication method. The method is applicable to a scenario in which a beam of a terminal device is predicted based on a prediction model. The method is performed by a terminal device or a module in a terminal device. Herein, an example in which the method is performed by the terminal device is used for descriptions. The method includes: The terminal device determines X pieces of downlink measurement information based on X downlink signals from an access network device, where X is an integer greater than 1; determines a first downlink signal and a second downlink signal, where the first downlink signal and the second downlink signal are downlink signals in the X downlink signals, the first downlink signal is a downlink signal determined based on an output of a first prediction model, an input of the first prediction model is determined based on Y pieces of downlink measurement information in the X pieces of downlink measurement information, the second downlink signal is determined based on the X pieces of downlink measurement information, and Y is an integer less than or equal to X and greater than 0; and the terminal device sends first information to the access network device if the first downlink signal and the second downlink signal meet a first condition, where the first information indicates the second downlink signal and the Y pieces of downlink measurement information, or the first information indicates that the first prediction model needs to be updated.

According to the foregoing method, when the terminal device determines that the predicted first downlink signal and the second downlink signal determined based on the actual downlink measurement information meet the first condition due to a channel environment change or mismatch between a prediction model and the channel environment, the terminal device may feed back the first information to the access network device, so that the access network device can determine that the first prediction model needs to be calibrated, in other words, needs to be retrained, and therefore, performance of the prediction model can be continuously improved.

In a possible design, second information is sent to the access network device if the first downlink signal and the second downlink signal meet a second condition, where the second information indicates the second downlink signal, or the second information indicates that the first prediction model does not need to be updated.

When the first downlink signal and the second downlink signal meet the second condition, the first prediction model may not be calibrated, so that feedback overheads of the terminal device can be reduced, and it is ensured that the first prediction model can meet a communication requirement.

According to a second aspect, this application provides a communication method. The method is applicable to a scenario in which a beam of a terminal device is predicted based on a prediction model. The method is performed by a terminal device or a module in a terminal device. Herein, an example in which the method is performed by the terminal device is used for descriptions. The method includes: The terminal device determines X pieces of downlink measurement information based on X downlink signals from an access network device, where X is an integer greater than 1; the terminal device determines a first downlink signal and a second downlink signal, where the first downlink signal and the second downlink signal are downlink signals in the X downlink signals, the first downlink signal is a downlink signal determined based on an output of a first prediction model, an input of the first prediction model is determined based on Y pieces of downlink measurement information in the X pieces of downlink measurement information, the second downlink signal is determined based on the X pieces of downlink measurement information, and Y is an integer less than or equal to X and greater than 0; and sends first information or second information to the access network device based on the first downlink signal and the second downlink signal, where the first information indicates that the first prediction model needs to be updated, or the first information indicates the second downlink signal and the Y pieces of downlink measurement information; and the second information indicates that the first prediction model is trusted, or the second information indicates that the first prediction model does not need to be updated, or the second information indicates that the second information does not include the Y pieces of downlink measurement information.

According to the foregoing method, when the terminal device determines that the predicted first downlink signal is inconsistent with the second downlink signal determined based on the actual downlink measurement information due to the channel environment change or the mismatch between the prediction model and the channel environment, the terminal device may feed back the second downlink signal and the Y pieces of downlink measurement information to the access network device, so that the access network device can determine that the first prediction model needs to be calibrated, in other words, needs to be retrained, and therefore, the performance of the prediction model can be continuously improved.

In a possible design, the second information further indicates the second downlink signal.

In a possible design, when it is determined that a first condition is met, the first information is sent; and when it is determined that a second condition is met, the second information is sent.

With reference to the first aspect or the second aspect, in a possible design, the X pieces of downlink measurement information are in one-to-one correspondence with the X downlink signals.

With reference to the first aspect or the second aspect, in a possible design, the first condition includes: difference information between the first downlink signal and the second downlink signal is greater than a first threshold.

According to the foregoing method, when the difference information between the first downlink signal and the second downlink signal is greater than the first threshold, it may be determined that a prediction result of the first prediction model is inaccurate and cannot meet a communication requirement, and therefore the first prediction model needs to be updated.

With reference to the first aspect or the second aspect, in a possible design, the second condition includes: The first downlink signal and the second downlink signal are an identical downlink signal, or the first downlink signal and the second downlink signal are not an identical downlink signal, but difference information between the first downlink signal and the second downlink signal is less than or equal to a first threshold.

According to the foregoing method, when the difference information between the first downlink signal and the second downlink signal is less than or equal to the first threshold, it may be determined that the prediction result of the first prediction model is accurate and can meet the communication requirement, and the first prediction model does not need to be updated.

With reference to the first aspect or the second aspect, in a possible design, the difference information between the first downlink signal and the second downlink signal includes an absolute value of a difference between first downlink measurement information corresponding to the first downlink signal and second downlink measurement information corresponding to the second downlink signal.

With reference to the first aspect or the second aspect, in a possible design, the difference information between the first downlink signal and the second downlink signal includes an absolute value of a difference between first position information corresponding to the first downlink signal and second position information corresponding to the second downlink signal.

With reference to the first aspect or the second aspect, in a possible design, the method further includes: training the first prediction model based on the Y pieces of downlink measurement information and the second downlink signal, to obtain a second prediction model; and sending third information to the access network device, where the third information indicates the second prediction model, or indicates information about the second prediction model.

According to the foregoing method, the terminal device updates the first prediction model, so that load of the access network device can be reduced.

With reference to the first aspect or the second aspect, in a possible design, the sending third information to the access network device includes:
sending the third information to the access network device when variation information between the second prediction model and the first prediction model is greater than or equal to a second threshold.

With reference to the first aspect or the second aspect, in a possible design, the information about the second prediction model includes the variation information between the second prediction model and the first prediction model.

With reference to the first aspect or the second aspect, in a possible design, the method further includes: receiving fourth information from the access network device, where the fourth information indicates information about a third prediction model; and updating the first prediction model to the third prediction model.

According to the foregoing method, the access network device updates the first prediction model, to ensure that communication efficiency is improved, and avoid communication interruption caused because the access network device cannot obtain the updated prediction model for a long time.

With reference to the first aspect or the second aspect, in a possible design, the third prediction model is obtained by training the first prediction model based on the Y pieces of downlink measurement information and the second downlink signal.

With reference to the first aspect or the second aspect, in a possible design, the first prediction model is the same as a prediction model configured in the access network device.

The same prediction model is configured in the access network device and the terminal device, so that the terminal device can determine, based on downlink measurement information obtained through actual measurement, whether the prediction model configured in the access network device is accurate, and calibrate the prediction model in the access network device in real time when the prediction model is inaccurate.

With reference to the first aspect or the second aspect, in a possible design, the first prediction model is agreed on in a protocol, or is configured by the access network device.

According to a third aspect, this application provides a communication method. The method is applicable to a scenario in which a beam of a terminal device is predicted based on a prediction model. The method is performed by an access network device or a module in an access network device. Herein, an example in which the method is performed by the access network device is used for descriptions. The method includes: The access network device sends X downlink signals to a terminal device, where X is an integer greater than 1; and receives first information from the terminal device, where the first information indicates a second downlink signal and Y pieces of downlink measurement information in X pieces of downlink measurement information, or the first information indicates that a first prediction model needs to be updated; and the second downlink signal is determined based on the X pieces of downlink measurement information (or the second downlink signal is an optimal signal in the X downlink signals), the X pieces of downlink measurement information are determined based on the X downlink signals (or the X pieces of downlink measurement information correspond to the X downlink signals), and Y is an integer less than or equal to X and greater than 0. The method may be further described as follows: The access network device sends X downlink signals to a terminal device, where X is an integer greater than 1; and receives first information from the terminal device, where the first information indicates a second downlink signal and Y pieces of downlink measurement information, or the first information indicates that a first prediction model needs to be updated; and the second downlink signal is an optimal signal in the X downlink signals, the Y pieces of downlink measurement information correspond to Y downlink signals in the X downlink signals, and Y is an integer less than or equal to X and greater than 0.

In a possible design, the X pieces of downlink measurement information are in one-to-one correspondence with the X downlink signals.

According to a fourth aspect, this application provides a communication method. The method is applicable to a scenario in which a beam of a terminal device is predicted based on a prediction model. The method is performed by an access network device or a module in an access network device. Herein, an example in which the method is performed by the access network device is used for descriptions. The method includes: The access network device sends X downlink signals to a terminal device, where X is an integer greater than 1; and receives first information or second information from the terminal device, where the first information indicates a second downlink signal and Y pieces of downlink measurement information in X pieces of downlink measurement information, or the first information indicates that a first prediction model needs to be updated; the second information indicates the second downlink signal, or the second information indicates that the first prediction model does not need to be updated; and the second downlink signal is determined based on the X pieces of downlink measurement information (or the second downlink signal is an optimal signal in the X downlink signals), the X pieces of downlink measurement information are determined based on the X downlink signals (or the X pieces of downlink measurement information correspond to the X downlink signals), and Y is an integer less than or equal to X and greater than 0. The method may be further described as follows: The access network device sends X downlink signals to a terminal device, where X is an integer greater than 1; and receives first information or second information from the terminal device, where the first information indicates a second downlink signal and Y pieces of downlink measurement information, or the first information indicates that a first prediction model needs to be updated; and the second information indicates the second downlink signal, or the second information indicates that the first prediction model does not need to be updated; and the second downlink signal is an optimal signal in the X downlink signals, the Y pieces of downlink measurement information correspond to Y downlink signals in the X downlink signals, and Y is an integer less than or equal to X and greater than 0.

In a possible design, the X pieces of downlink measurement information are in one-to-one correspondence with the X downlink signals.

In a possible design, a first downlink signal and the second downlink signal meet a first condition, the first downlink signal and the second downlink signal are downlink signals in the X downlink signals, the first downlink signal is a downlink signal determined based on an output of the first prediction model, and an input of the first prediction model is determined based on the Y pieces of downlink measurement information in the X pieces of downlink measurement information.

In a possible design, the method further includes: receiving second information from the terminal device, where the second information indicates the second downlink signal, or the second information indicates that the first prediction model does not need to be updated.

In a possible design, the first downlink signal and the second downlink signal meet a second condition.

With reference to the third aspect or the fourth aspect, in a possible design, the first condition includes: difference information between the first downlink signal and the second downlink signal is greater than a first threshold.

With reference to the third aspect or the fourth aspect, in a possible design, the second condition includes: The first downlink signal and the second downlink signal are an identical downlink signal, or the first downlink signal and the second downlink signal are not an identical downlink signal, but the difference information between the first downlink signal and the second downlink signal is less than or equal to the first threshold.

With reference to the third aspect or the fourth aspect, in a possible design, the difference information between the first downlink signal and the second downlink signal includes an absolute value of a difference between first downlink measurement information corresponding to the first downlink signal and second downlink measurement information corresponding to the second downlink signal.

With reference to the third aspect or the fourth aspect, in a possible design, the difference information between the first downlink signal and the second downlink signal includes an absolute value of a difference between first position information corresponding to the first downlink signal and second position information corresponding to the second downlink signal.

With reference to the third aspect or the fourth aspect, in a possible design, the method further includes: training the first prediction model based on the Y pieces of downlink measurement information and the second downlink signal, to obtain a third prediction model; and sending fourth information to the terminal device, where the fourth information indicates the third prediction model, or indicates information about the third prediction model.

With reference to the third aspect or the fourth aspect, in a possible design, the information about the third prediction model includes the variation information between the third prediction model and the first prediction model.

With reference to the third aspect or the fourth aspect, in a possible design, the method further includes: receiving third information from the terminal device, where the third information indicates information about a second prediction model; and updating the first prediction model to the second prediction model.

With reference to the third aspect or the fourth aspect, in a possible design, the first prediction model is the same as a prediction model configured in the terminal device.

According to a fifth aspect, this application provides a communication method. The method is applicable to a scenario in which a beam of a terminal device is predicted based on a prediction model. The method is performed by an access network device or a module in an access network device. Herein, an example in which the method is performed by the access network device is used for descriptions. The method includes: The access network device sends X downlink signals to a terminal device, and receives X pieces of downlink measurement information from the terminal device, where the X pieces of downlink measurement information are determined based on the X downlink signals, and X is an integer greater than 1; determines a first downlink signal and a second downlink signal, where the first downlink signal and the second downlink signal are downlink signals in the X downlink signals, the first downlink signal is a downlink signal determined based on an output of a first prediction model, an input of the first prediction model is determined based on Y pieces of downlink measurement information in the X pieces of downlink measurement information, the second downlink signal is determined based on the X pieces of downlink measurement information, and Y is an integer less than or equal to X and greater than 0; and trains the first prediction model based on the Y pieces of downlink measurement information and the second downlink signal if the first downlink signal and the second downlink signal meet a first condition, to obtain a third prediction model; and updates the first prediction model to the third prediction model.

According to the foregoing method, only the first prediction model may be deployed on the access network device. When the access network device determines that the predicted first downlink signal is inconsistent, due to a channel environment change or mismatch between a prediction model and the channel environment, with the second downlink signal determined based on the actual downlink measurement information, the access network device may calibrate the first prediction model based on the second downlink signal and the Y pieces of downlink measurement information, that is, retrain the first prediction model, to obtain an updated prediction model, and therefore, performance of the prediction model can be continuously improved.

In a possible design, the X pieces of downlink measurement information are in one-to-one correspondence with the X downlink signals.

In a possible design, if the first downlink signal and the second downlink signal meet a second condition, the first prediction model is kept unchanged.

In a possible design, the first condition includes: difference information between the first downlink signal and the second downlink signal is greater than a first threshold.

In a possible design, the second condition includes: The first downlink signal and the second downlink signal are an identical downlink signal, or the first downlink signal and the second downlink signal are not an identical downlink signal, and the difference information between the first downlink signal and the second downlink signal is less than or equal to the first threshold.

In a possible design, the difference information between the first downlink signal and the second downlink signal includes an absolute value of a difference between first downlink measurement information corresponding to the first downlink signal and second downlink measurement information corresponding to the second downlink signal.

In a possible design, the difference information between the first downlink signal and the second downlink signal includes an absolute value of a difference between first position information corresponding to the first downlink signal and second position information corresponding to the second downlink signal.

According to a sixth aspect, this application provides a communication method. The method is applicable to a scenario in which uplink measurement information measured by an access network device is predicted based on a prediction model. The method is performed by an access network device or a module in an access network device. Herein, an example in which the method is performed by the access network device is used for descriptions. The method includes: The access network device receives X uplink signals from a terminal device, and determines X pieces of uplink measurement information based on the X uplink signals, where X is an integer greater than 1; determines a first uplink signal and a second uplink signal, where the first uplink signal and the second uplink signal are uplink signals in the X uplink signals, the first uplink signal is an uplink signal determined based on an output of a fourth prediction model, an input of the fourth prediction model is determined based on Y pieces of uplink measurement information in the X pieces of uplink measurement information, the second uplink signal is determined based on the X pieces of uplink measurement information, and Y is an integer less than X and greater than 0; trains the fourth prediction model based on the Y pieces of uplink measurement information and the second uplink signal if the first uplink signal and the second uplink signal meet a third condition, to obtain a fifth prediction model; and updates the fourth prediction model to the fifth prediction model.

According to the foregoing method, the fourth prediction model is deployed on the access network device. When the access network device determines that the predicted first uplink signal is inconsistent, due to a channel environment change or mismatch between a prediction model and the channel environment, with the second uplink signal determined based on the actual uplink measurement information, the access network device may retrain the fourth prediction model based on the second uplink signal and the Y pieces of uplink measurement information, to obtain an updated prediction model, and therefore, performance of the prediction model can be continuously improved.

In a possible design, if the first uplink signal and the second uplink signal meet a fourth condition, the fourth prediction model is kept unchanged.

In a possible design, the third condition includes: difference information between the first uplink signal and the second uplink signal is greater than a third threshold.

In a possible design, the fourth condition includes: The first uplink signal and the second uplink signal are an identical uplink signal, or the first uplink signal and the second uplink signal are not an identical uplink signal, but the difference information between the first uplink signal and the second uplink signal is less than or equal to the third threshold.

In a possible design, the difference information between the first uplink signal and the second uplink signal includes an absolute value of a difference between first uplink measurement information corresponding to the first uplink signal and second uplink measurement information corresponding to the second uplink signal.

In a possible design, the difference information between the first uplink signal and the second uplink signal includes an absolute value of a difference between position information corresponding to the first uplink signal and position information corresponding to the second uplink signal.

According to a seventh aspect, this application further provides a communication apparatus. The communication apparatus can implement any method or any implementation provided in the first aspect or the second aspect. The communication apparatus may be implemented by hardware, may be implemented by software, or may be implemented by hardware executing corresponding software. The hardware or the software includes one or more units or modules corresponding to the foregoing functions.

In a possible implementation, the communication apparatus includes a processor. The processor is configured to support the communication apparatus in performing the method according to the first aspect or the second aspect. The communication apparatus may further include a memory. The memory may be coupled to the processor, and store program instructions and data that are necessary for the communication apparatus. Optionally, the communication apparatus further includes an interface circuit, and the interface circuit is configured to support the communication apparatus in communicating with another communication apparatus.

In a possible implementation, a structure of the communication apparatus includes a processing unit and a communication unit. These units may perform corresponding functions in the foregoing method examples. For details, refer to the descriptions in the first aspect or the second aspect. Details are not described herein again.

According to an eighth aspect, this application further provides a communication apparatus. The communication apparatus can implement any method or any implementation provided in any one of the third aspect to the sixth aspect. The communication apparatus may be implemented by hardware, may be implemented by software, or may be implemented by hardware executing corresponding software. The hardware or the software includes one or more units or modules corresponding to the foregoing functions.

In a possible implementation, the communication apparatus includes a processor. The processor is configured to support the communication apparatus in performing the method according to any one of the third aspect to the sixth aspect. The communication apparatus may further include a memory. The memory may be coupled to the processor, and store program instructions and data that are necessary for the communication apparatus. Optionally, the communication apparatus further includes an interface circuit, and the interface circuit is configured to support the communication apparatus in communicating with another communication apparatus.

In a possible implementation, a structure of the communication apparatus includes a processing unit and a communication unit. These units may perform corresponding functions in the foregoing method examples. For details, refer to descriptions in the method provided in any one of the third aspect to the sixth aspect. Details are not described herein.

According to a ninth aspect, a communication apparatus is provided, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to execute a computer program or instructions stored in the memory, to implement the method in any one of the first aspect or the second aspect and the possible implementations thereof, or implement the method in any one of the third aspect to the sixth aspect and the possible implementations thereof. Optionally, the apparatus further includes a memory, and the memory stores a computer program or instructions.

According to a tenth aspect, a computer-readable storage medium is provided. The computer-readable storage medium stores a computer program or instructions. When the computer program or the instructions are run on a computer, the computer is enabled to implement the method in any one of the first aspect or the second aspect and the possible implementations thereof, or the computer is enabled to implement the method in any one of the third aspect to the sixth aspect and the possible implementations thereof.

According to an eleventh aspect, a computer program product including computer-readable instructions is provided. When the computer-readable instructions are run on a computer, the computer is enabled to implement the method in any one of the first aspect or the second aspect and the possible implementations thereof, or the computer is enabled to implement the method in any one of the third aspect to the sixth aspect and the possible implementations thereof.

According to a twelfth aspect, a chip is provided. The chip includes a processor, and may further include a memory. The processor is coupled to the memory, and is configured to execute a computer program or instructions stored in the memory, to enable the chip to implement the method in any one of the first aspect or the second aspect and the possible implementations thereof, or to enable the chip to implement the method in any one of the third aspect to the sixth aspect and the possible implementations thereof.

According to a thirteenth aspect, a communication system is provided. The system includes an apparatus (such as a terminal device) for implementing the first aspect or the second aspect and an apparatus (such as an access network device) for implementing the third aspect.

According to a fourteenth aspect, a communication system is provided, where the system includes a terminal device and an apparatus (such as an access network device) for implementing the fourth aspect or the fifth aspect.

**BRIEF DESCRIPTION OF DRAWINGS**

FIG. 1 is a diagram of an architecture of a communication system applicable to this disclosure;
FIG. 2 is a diagram of a layer relationship of a neural network according to this disclosure;
FIG. 3 is an example diagram of an application framework of AI in a communication system according to this disclosure;
FIG. 4(a) to FIG. 4(d) are example diagrams of a network architecture to which a method provided in this disclosure may be applied;

FIG. 5 is a diagram of capability interaction according to this disclosure;
FIG. 6 is a diagram of a structure of a model according to this disclosure;
FIG. 7 is a schematic flowchart of a communication method according to this disclosure;
FIG. 8 is a diagram of a beam position according to this disclosure;
FIG. 9 is a diagram of a beam position according to this disclosure;
FIG. 10 is a schematic flowchart of a model update method according to this disclosure;
FIG. 11 is a schematic flowchart of a communication method according to this disclosure;
FIG. 12 is a schematic flowchart of a communication method according to this disclosure;
FIG. 13 is a diagram of a structure of a communication apparatus according to this disclosure; and
FIG. 14 is a diagram of a structure of a communication apparatus according to this disclosure.

## DESCRIPTION OF EMBODIMENTS

The following describes this disclosure in detail with reference to the accompanying drawings in this specification.

The technical solutions of this disclosure may be applied to various communication systems, for example, a long term evolution (long term evolution, LTE) system, a 5th generation (5th generation, 5G) mobile communication system, or a next generation mobile communication system. This is not limited herein. The 5G system may also be referred to as a new radio (new radio, NR) system.

In this disclosure, descriptions are provided by using an example of interaction between a terminal device and an access network device. It should be noted that, the method provided in this disclosure not only may be applied to interaction between the terminal device and the access network device, but also may be applied to interaction between other two devices. This is not limited in this disclosure.

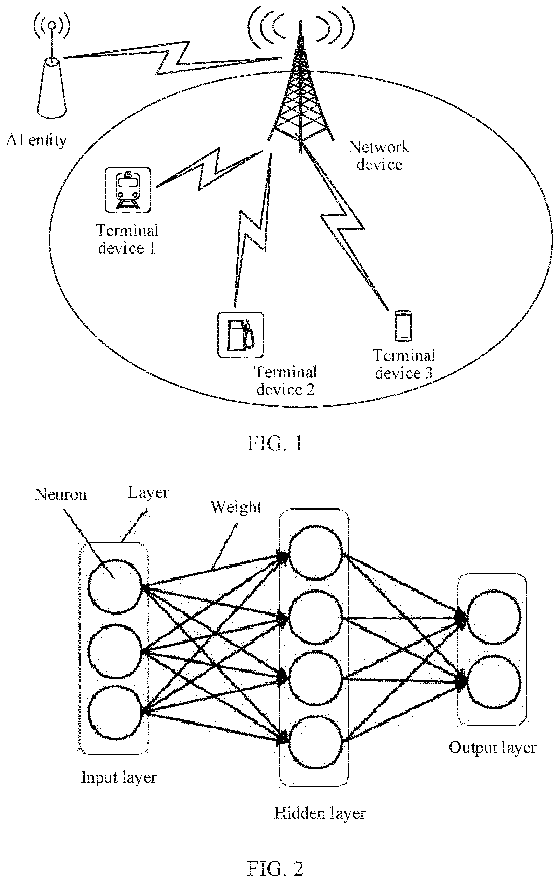

For ease of understanding this disclosure, the communication system shown in FIG. 1 is first used as an example to describe in detail the communication system applicable to this disclosure. FIG. 1 is a diagram of an architecture of a communication system to which this disclosure can be applied. The communication system includes an access network device and a terminal device. The terminal device may establish a connection to the access network device, and communicate with the access network device. FIG. 1 is merely a diagram. Quantities of access network devices and terminal devices included in the communication system are not limited in this disclosure.

To support artificial intelligence (artificial intelligence, AI) in a wireless network, a dedicated AI entity (or referred to as an AI module) may be further introduced into the network. The AI entity may correspond to one independent network element, or may be located inside a network element, and the network element may be a core network device, an access network device, operations, administration and maintenance (operations, administration and maintenance, OAM), or the like. For example, as shown in FIG. 1, the AI entity is located outside the access network device, and may communicate with the access network device. For example, the access network device may forward, to the AI entity, data that is related to an AI model and that is reported by the terminal device, and the AI entity performs operations such as training dataset construction and model training, and sends a trained artificial intelligence model to the access network device, and/or forwards the trained artificial intelligence model to each terminal device through the access network device. In this disclosure, the OAM is configured to operate, manage, and/or maintain the core network device (operations, administration and maintenance of the core network device), and/or is configured to operate, manage, and/or maintain the access network device (operations, administration and maintenance of the access network device). The OAM of the access network device and the OAM of the core network device may be the same or different. This is not limited. For example, this disclosure includes first OAM and second OAM. The first OAM is the operations, administration and maintenance of the core network device, and the second OAM is the operations, administration and maintenance of the access network device. The first OAM and/or the second OAM may include the AI entity. For another example, this disclosure includes third OAM, and the third OAM is the operations, administration and maintenance of both the core network device and the access network device.

Optionally, to match and support AI, the AI entity may be integrated into a terminal or a terminal chip.

Optionally, in this disclosure, the AI entity may be a software model, a hardware structure, or a combination of a hardware structure and a software model. This is not limited. The AI entity may also have another name, and is mainly configured to implement an AI function (or referred to as an AI-related operation). A specific name of the AI entity is not limited in this disclosure.

In this disclosure, the AI model is a specific method for implementing the AI function, and the AI model represents a mapping relationship between an input and an output of the model. The AI model may be a neural network, a random forest model, a support vector machine model, a decision tree model, or another machine learning model. The AI model may be referred to as a model for short. The AI-related operation may include at least one of the following: data collection, model training, model verification, model information release, model inference (or referred to as model inference or prediction), inference result release, or the like.

In this disclosure, the terminal device may be referred to as a terminal for short. The terminal device may communicate with one or more core networks through a radio access network (radio access network, RAN).

In this disclosure, the terminal device may be a device having a radio transceiver function or a chip that can be disposed in the device. The terminal device may also be referred to as user equipment (user equipment, UE), an access terminal, a subscriber unit, a subscriber station, a mobile station, a remote station, a remote terminal, a mobile device, a user terminal, a wireless communication device, a user agent, a user apparatus, or the like. The terminal device in this disclosure may be a mobile phone (mobile phone), a pad (Pad), a computer with a radio transceiver function, a virtual reality (virtual reality, VR) terminal, an augmented reality (augmented reality, AR) terminal, a wearable device, a vehicle, an uncrewed aerial vehicle, a helicopter, an aircraft, a ship, a robot, a robot arm, a smart home device, or the like. The terminal device in this disclosure may be widely used in communication in various scenarios, for example, including but not limited to at least one of the following scenarios: enhanced mobile broadband (enhanced mobile broadband, eMBB), ultra-reliable and low-latency communication (ultra-reliable low-latency communication, URLLC), device-to-device (device-to-device, D2D), vehicle to everything (vehicle to everything, V2X), machine-type communication (machine-type communication, MTC), massive machine-type communication (massive machine-type communication, mMTC), internet of things (internet of things, IoT), virtual reality, augmented reality, industrial control, autonomous driving, remote medical, a smart grid, smart furniture, smart office, smart wearable, smart transportation, a smart city, or the like. A specific technology and a specific device form that are used by the terminal are not limited in this disclosure.

In this disclosure, an apparatus configured to implement a function of the terminal may be the terminal, or may be an apparatus that can support the terminal in implementing the function, for example, a chip system, a hardware circuit, a software module, or a combination of a hardware circuit and a software module. The apparatus may be installed in the terminal or may be matched with the terminal for usage.

The access network device may be a base station (base station), a NodeB (NodeB), an evolved NodeB (evolved NodeB, eNodeB), a transmission reception point (transmission reception point, TRP), a next generation NodeB (next generation NodeB, gNB) in a 5th generation (5th generation, 5G) mobile communication system, an access network device in an open radio access network (open radio access network, O-RAN or open RAN), a next generation base station in a 6th generation (6th generation, 6G) mobile communication system, a base station in a future mobile communication system, an access node in a wireless fidelity (wireless fidelity, Wi-Fi) system, or the like; or may be a module or unit that completes some functions of the base station, for example, may be a central unit (central unit, CU), a distributed unit (distributed unit, DU), a central unit control plane (CU control plane, CU-CP) module, or a central unit user plane (CU user plane, CU-UP) module. The radio access network device may be a macro base station, may be a micro base station or an indoor base station, or may be a relay node, a donor node, or the like. A specific technology and a specific device form that are used by the access network device are not limited in this disclosure.

(1) Protocol layer structure

Communication between the access network device and the terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer, used to perform transmission of data related to the AI function.

(2) Central unit (central unit, CU) and distributed unit (distributed unit, DU)

The access network device may include a CU and a DU. A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. Specific names of the interfaces are not limited in this disclosure. The CU and the DU may be divided based on protocol layers of the wireless network. For example, functions of the PDCP layer and protocol layers above the PDCP layer are disposed on the CU, and functions of protocol layers below the PDCP layer (for example, the RLC layer and the MAC layer) are disposed on the DU. For another example, functions of protocol layers above the PDCP layer are disposed on the CU, and functions of the PDCP layer and protocol layers below the PDCP layer are disposed on the DU. This is not limited.

Division of processing functions of the CU and the DU based on the protocol layers is merely an example, and the processing functions of the CU and the DU may alternatively be divided in another manner. For example, the CU or the DU may be divided into functions having more protocol layers. For another example, the CU or the DU may be further divided into some processing functions having protocol layers. In a design, some functions of the RLC layer and functions of protocol layers above the RLC layer are configured on the CU, and remaining functions of the RLC layer and functions of protocol layers below the RLC layer are configured on the DU. In another design, division of functions of the CU or the DU may alternatively be performed based on service types or other system requirements. For example, the division may be performed based on latency. Functions whose processing time needs to meet a latency requirement are set on the DU, and functions whose processing time does not need to meet the latency requirement are set on the CU. In another design, the CU may alternatively have one or more functions of the core network. For example, the CU may be disposed on a network side to facilitate centralized management. In another design, a radio unit (radio unit, RU) of the DU is disposed remotely. Optionally, the RU may have a radio frequency function.

Optionally, the DU and the RU may be distinguished at a physical layer (physical layer, PHY). For example, the DU may implement higher-layer functions of the PHY layer, and the RU may implement lower-layer functions of the PHY layer. When the PHY layer is used for sending, functions of the PHY layer may include at least one of the following functions: a cyclic redundancy check (cyclic redundancy check, CRC) bit, channel coding, rate matching, scrambling, modulation, layer mapping, precoding, resource mapping, physical antenna mapping, or radio frequency sending. When the PHY layer is used for receiving, functions of the PHY layer may include at least one of the following: CRC check, channel decoding, de-rate matching, descrambling, demodulation, layer demapping, channel detection, resource demapping, physical antenna demapping, or radio frequency receiving. The higher-layer functions of the PHY layer may include some functions of the PHY layer. For example, the some functions are closer to the MAC layer. The lower-layer functions of the PHY layer may include some other functions of the PHY layer. For example, the some other functions are closer to the radio frequency function. For example, the higher-layer functions of the PHY layer may include CRC code addition, channel coding, rate matching, scrambling, modulation, and layer mapping, and the lower-layer functions of the PHY layer may include precoding, resource mapping, physical antenna mapping, and radio frequency sending. Alternatively, the higher-layer functions of the PHY layer may include CRC code addition, channel coding, rate matching, scrambling, modulation, layer mapping, and precoding. The lower-layer functions of the PHY layer may include resource mapping, physical antenna mapping, and radio frequency sending. For example, the higher-layer functions of the PHY layer may include CRC check, channel decoding, de-rate matching, decoding, demodulation, and layer demapping, and the lower-layer functions of the PHY layer may include channel detection, resource demapping, physical antenna demapping, and radio frequency receiving. Alternatively, the higher-layer functions of the PHY layer may include CRC check, channel decoding, de-rate matching, decoding, demodulation, layer demapping, and channel detection, and the lower-layer functions of the PHY layer may include resource demapping, physical antenna demapping, and radio frequency receiving.

For example, the functions of the CU may be implemented by one entity, or may be implemented by different entities. For example, the functions of the CU may be further divided. In other words, a control plane and a user plane are separated and implemented by different entities, which are a control plane CU entity (namely, a CU-CP entity) and a user plane CU entity (namely, a CU-UP entity). The CU-CP entity and the CU-UP entity may be coupled to the DU, to jointly complete a function of the access network device.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. These modules and methods performed by these modules also fall within the protection scope of this disclosure.

In a possible implementation, the access network device includes the CU-CP, the CU-UP, the DU, and the RU. For example, in this disclosure, the DU, or the DU and the RU, or the CU-CP, the DU, and the RU, or the CU-UP, the DU, and the RU perform the function of the access network device. This is not limited. Methods performed by the modules also fall within the protection scope of this disclosure.

In this disclosure, an apparatus configured to implement the function of the access network device may be the access network device, or may be an apparatus that can support the access network device in implementing the function, for example, a chip system. The apparatus may be installed in the access network device or used in matching with the access network device.

This disclosure is applicable to the following scenario: The access network device predicts, by using the AI model, information that needs to be measured by the terminal device, to reduce frequent sending of a downlink signal by the access network device, and reduce frequent measurement of the information by the terminal device based on the downlink signal. This reduces resource overheads of the information and saves computing resources of the terminal device.

For example, a high frequency band above 6 gigahertz (gigahertz, GHz) is introduced into an NR system for data communication. In high-frequency communication, a large quantity of antennas are usually used for beamforming, so that a beam gain can be obtained to compensate for a limited propagation distance caused by a high-frequency propagation characteristic. A high-frequency wireless channel usually has definite sparseness. In other words, main energy of the channel is concentrated on a limited quantity of paths. When there is a line of sight (line of sight, LOS) path, with no blocking, between a transmitter and a receiver, main energy between the receiver and the transmitter is concentrated on the line of sight path. When there is non-line of sight (non-line of sight, NLOS) blocking between the transmitter and the receiver, the main energy between the receiver and the transmitter is mainly concentrated on a path that a signal that is reflected once can reach. Generally, each path has different incident angles and different emergent angles. Therefore, when a transmitter of a high-frequency communication system aligns a beam direction with an incident angle of a main path of a channel, and a receiver of the high-frequency communication system aligns a beam direction with an emergent angle of the main path of the channel, most channel transmission energy can be obtained to complete high-quality communication. One beam direction may be considered as one specific data transmission direction.

A simple beam management solution may be designed. It is assumed that all candidate beamforming beams are included in one codebook, each codeword in the codebook may be used to precode a signal, and a precoded signal is propagated in space based on specific spatial directivity, to form a beamforming effect. Therefore, one codeword corresponds to one beam. The codeword in the codebook is represented in a form of a complex number vector, and a quantity of elements of the complex number vector of each codeword is equal to a quantity of antennas (or described as antenna ports), for example, $R$ includes $C$ codewords, and may be represented as $R = [w_1, w_2, ... , w_C]$. Each codeword $w_i$ is represented as $w_i = [v_1, v_2, ... , v_{N_T}]^T$, where a value of $i$ ranges from 1 to $C$, $C$ is an integer greater than or equal to 1, $N_T$ is a quantity of antennas, a complex number $v_j$ represents a weight of a jth antenna, a value of $j$ ranges from 1 to $N_T$, and $N_T$ is an integer greater than or equal to 1. When the codeword $w_i$ is for precoding a signal, it is equivalent to adjusting an amplifier and/or a phase shifter of a corresponding antenna based on a weight $v_i$ of each antenna in the codeword $w_i$, to adjust a pattern of the signal sent or received by the antenna, so that propagation of the signal has spatial directivity, in other words, the beamforming beams are generated.

Beams corresponding to different codewords in the codebook may point to different directions, to cover entire propagation space as much as possible. Each time a signal is transmitted, one proper codeword is selected from the codebook to match a direction of the main path of the channel. The access network device maintains a codebook of the access network device, and the terminal device maintains a codebook of the terminal device. Transmission in a downlink direction is used as an example. When communication is needed, the access network device scans, in a specific order, candidate codewords that are in the codebook: The access network device transmits a reference signal by using a beam corresponding to each of the candidate codewords that are in the codebook; the terminal device receives the reference signal, and feeds back information about a reference signal corresponding to a receive beam whose received signal strength is highest or exceeds a specific threshold, for example, feeds back an index of the reference signal or performs feedback on a resource corresponding to the reference signal; and the access network device determines an optimal beam based on the feedback information of the terminal device, for example, determines a transmit beam with the highest received signal strength as the optimal beam, and sends downlink data to the terminal device by using the optimal beam. The process may also be referred to as beam alignment. However, because the entire codebook needs to be scanned to select the optimal codeword, air interface overheads are high. For a slot of a fixed length, a large quantity of time resources are used for beam alignment, which restricts a maximum capacity of data transmission. In addition, in a high-speed mobility scenario, a channel changes quickly and channel correlation time is short, and it may be difficult for the receiver and the transmitter to complete effective beam alignment. As a result, communication cannot be established.

In this disclosure, beam prediction is performed by using a machine learning technology, so that overheads of beam scanning can be reduced. Specifically, for one codebook, the transmitter does not scan all codewords corresponding to the codebook any more, but scans a part of codewords in the codebook according to a specific rule, that is, selects only the part of codewords in the codebook to send a reference signal. The receiver measures the received reference signal, obtains measurement information, and feeds back the measurement information to the transmitter. The transmitter predicts an optimal codeword index (or beam index) in a full codebook based on the received measurement information. A prediction function is implemented by the AI model. Because only the part of codewords in the codebook needs to be scanned, air interface overheads for beam alignment can be reduced. Further, in this disclosure, an identical AI model may be deployed for the access network device and the terminal device, the terminal device may predict an optimal codeword index based on the AI model, and the terminal device may further obtain a real optimal codeword index by measuring the reference signal. When the predicted optimal codeword index is inconsistent with the real optimal codeword index, the access network device or the terminal device may retrain the AI model, to check the AI model. Details are described below. The retraining includes but is not limited to: performing training by using an initial model, or performing update training by using a current model.

Before the method in this disclosure is described, some related knowledge about artificial intelligence is first briefly described. The artificial intelligence enables a machine to have human intelligence. For example, the machine can simulate some intelligent behavior of human beings by using computer software and hardware. To implement the artificial intelligence, machine learning methods or many other methods can be used. For example, machine learning includes a neural network (neural network, NN). The neural network is a specific implementation of the machine learning. According to the general approximation theorem, the neural network can approximate any continuous function in theory, so that the neural network has a capability of learning any mapping. Therefore, the neural network can accurately perform abstract modeling for a complex high-dimension problem. An idea of the neural network is from a neuron structure of brain tissue. Each neuron performs a weighted summation operation on input values of the neuron, and outputs a result of weighted summation through an activation function. It is assumed that an input of the neuron is $\mathbf{x} = [x_0, \dots, x_n]$, a weight corresponding to the input is $w = [w_0, \dots, w_n]$, and an offset of the weighted summation is b. Forms of the activation function may be diversified. Assuming that an activation function of one neuron is $y = f(z) = \max(0, z)$, an output of the neuron is

$$y = f\left(\sum_{i=0}^{i=n} w_i * x_i + b\right) = \max\left(0, \sum_{i=0}^{i=n} w_i * x_i + b\right)$$

. For another example, if an activation function of one neuron is $y = f(z) = z$, an output of the neuron is $y =$

$$f\left(\sum_{i=0}^{i=n} w_i * x_i + b\right) = \sum_{i=0}^{i=n} w_i * x_i + b$$

. $w_i$, $x_i$, and b may be various possible values such as a decimal, an integer (including 0, a positive integer, a negative integer, or the like), or a complex number. Activation functions of different neurons in the neural network may be the same or different.

The neural network generally includes a multi-layer structure, and each layer may include one or more neurons. Increasing a depth and/or a width of the neural network can improve an expression capability of the neural network, and provide more powerful information extraction and abstract modeling capabilities for complex systems. The depth of the neural network may refer to a quantity of layers included in the neural network, and a quantity of neurons included in each layer may be referred to as a width of the layer. FIG. 2 is a diagram of a layer relationship of a neural network. In an implementation, the neural network includes an input layer and an output layer. After performing neuron processing on a received input, the input layer of the neural network transfers a result to the output layer, and the output layer obtains an output result of the neural network. In another implementation, the neural network includes an input layer, a hidden layer, and an output layer. The input layer of the neural network performs neuron processing on a received input, and then transfers a result to an intermediate hidden layer. The hidden layer then transfers a calculation result to the output layer or an adjacent hidden layer. Finally, the output layer obtains an output result of the neural network. One neural network may include one hidden layer or a plurality of hidden layers that are sequentially connected. This is not limited. In a training process of the neural network, a loss function may be defined. The loss function describes a difference value or a difference between an output value of the neural network and an ideal target value. A specific form of the loss function is not limited in this disclosure. A training process of the neural network is a process of adjusting a neural network parameter, such as a quantity of layers and a width of the neural network, a weight of a neuron, and/or a parameter in an activation function of a neuron, so that a value of the loss function is less than a threshold or meets a target requirement. In other words, the difference between the output value of the neural network and the ideal target value is the smallest.

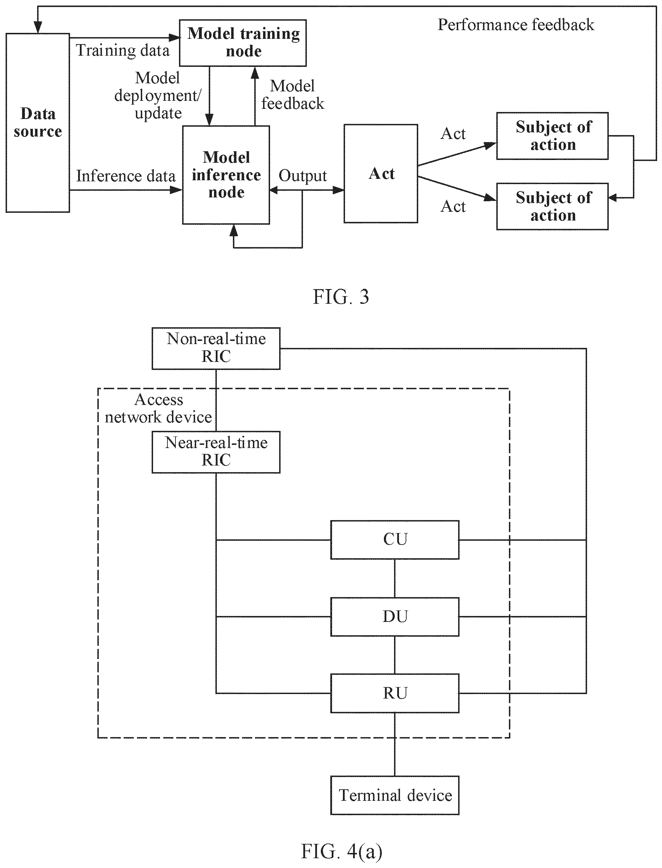

FIG. 3 is an example diagram of a first application framework of AI in a communication system. In FIG. 3, a data source (data source) is used to store training data and inference data. A model training node (model training host) analyzes or trains training data (training data) provided by the data source, to obtain an AI model, and deploys the AI model on a model inference node (model inference host). The AI model represents a mapping relationship between an input and an output of the model. Obtaining an AI model through learning by the model training node is equivalent to obtaining the mapping relationship between the input and the output of the model through learning by the model training node by using training data. The model inference node performs inference based on the inference data provided by the data source by using the AI model and obtains an inference result. The method may also be described as follows: The model inference node inputs the inference data into the AI model, and obtains an output by using the AI model. The output is the inference result. The inference result may indicate a configuration parameter used (acted) by a subject of action, and/or an operation performed by the subject of action. The inference result may be planned by an actor (actor) entity in a unified manner, and sent to one or more subjects of action (for example, network elements) for action.

In this disclosure, the application framework shown in FIG. 3 may be deployed on the network element shown in FIG. 1. For example, the application framework in FIG. 3 may be deployed on the access network device or the AI entity in FIG. 1. For example, in the access network device, the model training node may analyze or train training data (training data) provided by the data source, to obtain a model. The model inference node can perform inference by using the model and inference data provided by the data source, and obtain an output of the model. To be specific, an input of the model includes the inference data, and the output of the model is an inference result corresponding to the model. For example, the model training node is a CU, and the model inference node is a CU or a DU; or the model training node is a DU, and the model inference node is a DU; or the model training node is a near-real-time RIC described below, and the model inference node is a near-real-time RIC, a CU, or a DU. For example, a terminal device is considered as a subject of action in FIG. 3. The access network device may send the inference data and/or the inference result corresponding to the model to the terminal device, and the terminal device may perform a corresponding operation based on the inference data and/or the inference result.

With reference to FIG. 4(a) to FIG. 4(d), the following describes a network architecture to which a communication solution provided in this disclosure may be applied.

As shown in FIG. 4(a), in a first possible implementation, an access network device includes a near-real-time access network intelligent control (RAN intelligent controller, RIC) module, configured to perform model learning and/or inference. For example, the near-real-time RIC may obtain information on a network side and/or a terminal side from at least one of a CU, a DU, and an RU, and the information may be used as training data or inference data. Optionally, the near-real-time RIC may submit an inference result to at least one of the CU, the DU, and the RU. Optionally, the CU and the DU may exchange the inference result. Optionally, the DU and the RU may exchange the inference result. For example, the near-real-time RIC submits the inference result to the DU, and the DU submits the inference result to the RU. For example, the near-real-time RIC may be configured to train an AI model, and inference is performed by using the AI model.

As shown in FIG. 4(a), in a second possible implementation, a non-real-time RIC (optionally, the non-real-time RIC may be located in OAM or a core network device) other than an access network device is included, and is used for model learning and inference. For example, the non-real-time RIC may obtain information on the network side and/or the terminal side from at least one of the CU, the DU, and the RU. The information may be used as training data or inference data, and an inference result may be submitted to at least one of the CU, the DU, and the RU. Optionally, the CU and the DU may exchange the inference result. Optionally, the DU and the RU may exchange the inference result. For example, the non-real-time RIC submits the inference result to the DU, and the DU submits the inference result to the RU. For example, the non-real-time RIC is configured to train an AI model, and inference is performed by using the AI model.

As shown in FIG. 4(a), in a third possible implementation, an access network device includes a near-real-time RIC, and the non-real-time RIC (optionally, the non-real-time RIC may be located in OAM or a core network device) other than the access network device is included. Same as the second possible implementation, the non-real-time RIC may be configured to perform model learning and/or inference; and/or, same as the first possible implementation, the near-real-time RIC may be configured to perform model learning and/or inference; and/or the near-real-time RIC may obtain AI model information from the non-real-time RIC, obtain information on the network side and/or the terminal side from at least one of the CU, the DU, and the RU, and obtain an inference result by using the information and the AI model. Optionally, the near-real-time RIC may submit the inference result to at least one of the CU, the DU, and the RU. Optionally, the CU and the DU may exchange the inference result. Optionally, the DU and the RU may exchange the inference result. For example, the near-real-time RIC submits the inference result to the DU, and the DU submits the inference result to the RU. For example, the near real-time RIC is configured to train a model A, and inference is performed by using the model A. For example, the non-real-time RIC is configured to train a model B, and inference is performed by using the model B. For example, the non-real-time RIC is configured to train a model C, and information about the model C is submitted to the near-real-time RIC, and the near-real-time RIC performs inference by using the model C.

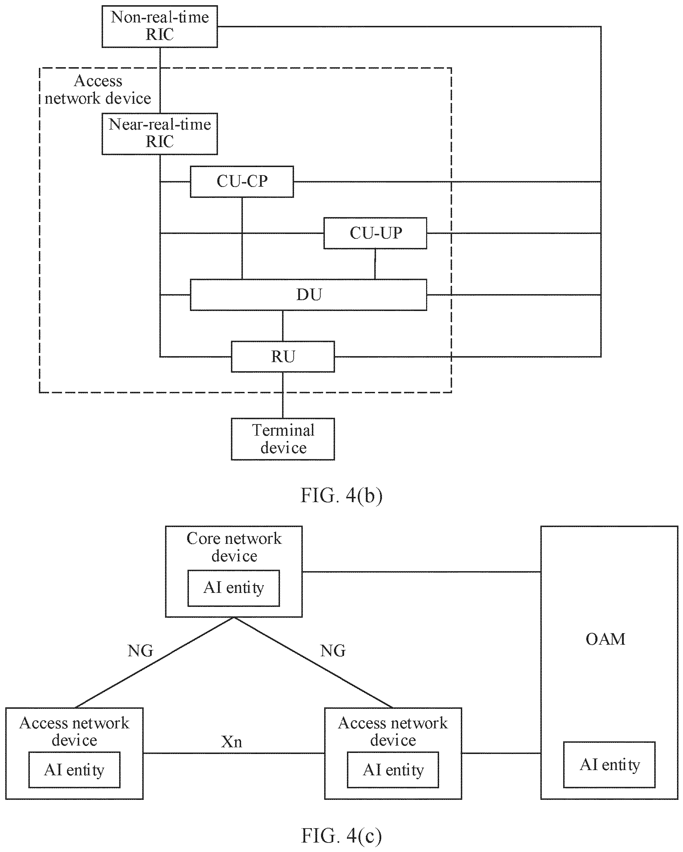

FIG. 4(b) is an example diagram of a network architecture to which a method provided in this disclosure may be applied. Compared with FIG. 4(a), in FIG. 4(b), a CU is separated into a CU-CP and a CU-UP.

FIG. 4(c) is an example diagram of a network architecture to which a method provided in this disclosure may be applied. As shown in FIG. 4(c), optionally, an access network device includes one or more AI entities, and a function of the AI entity is similar to that of the near-real-time RIC. Optionally, OAM includes one or more AI entities, and a function of the AI entity is similar to that of the non-real-time RIC. Optionally, a core network device includes one or more AI entities, and a function of the AI entity is similar to that of the non-real-time RIC. When the OAM and the core network device each include an AI entity, models obtained by training by the AI entities of the OAM and the core network device are different, and/or models used for inference are different.

In this disclosure, different models include but are not limited to at least one of the following differences: a structure parameter of the model (for example, a quantity of layers of the model, a connection relationship between layers, a quantity of neurons included in each layer, an activation function of a neuron, a weight of a neuron, and/or an offset of a neuron), input parameters of the model, or output parameters of the model.

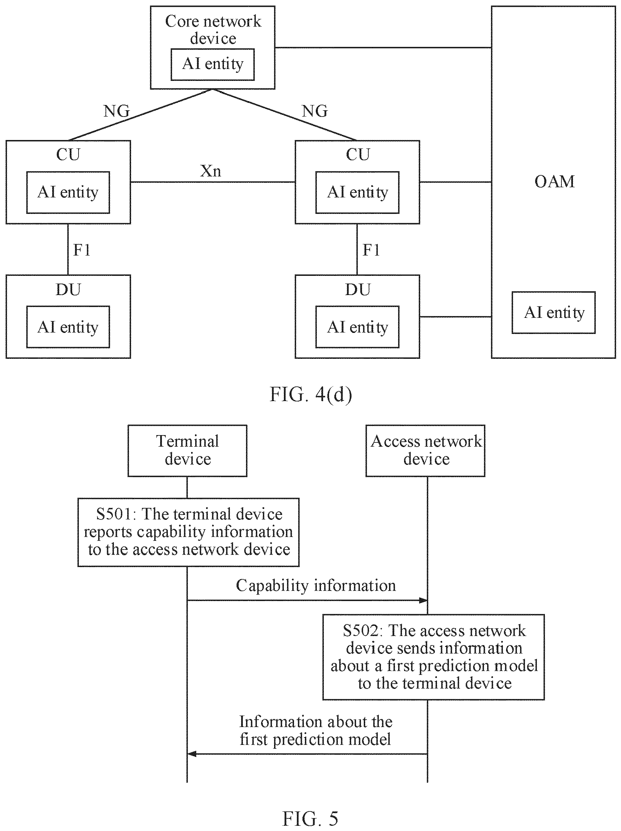

FIG. 4(d) is an example diagram of a network architecture to which a method provided in this disclosure may be applied. Compared with FIG. 4(c), an access network device in FIG. 4(d) is separated into a CU and a DU. Optionally, the CU may include an AI entity, and a function of the AI entity is similar to that of the near-real-time RIC. Optionally, the DU may include an AI entity, and a function of the AI entity is similar to that of the near-real-time RIC. When the CU and the DU each include an AI entity, models obtained by training by the AI entities of the CU and the DU are different, and/or models used for inference are different. Optionally, the CU in FIG. 4(d) may be further separated into a CU-CP and a CU-UP. Optionally, one or more AI models may be deployed on the CU-CP. Optionally, one or more AI models may be deployed on the CU-UP. Optionally, in FIG. 4(c) or FIG. 4(d), the OAM of the access network device and the OAM of the core network device may be separately and independently deployed.

In this disclosure, one parameter or a plurality of parameters may be obtained through inference by using one model. Learning processes of different models may be deployed on different devices or nodes, or may be deployed on an identical device or node. Inference processes of different models may be deployed on different devices or nodes, or may be deployed on an identical device or node.

It may be understood that, in this disclosure, the AI entity, the access network device, or the like may perform some or all of the steps in this disclosure. These steps or operations are merely examples. This disclosure may further perform other operations or variations of various operations. In addition, the steps may be performed in an order different from an order presented in this disclosure, and not all the operations in this disclosure may be performed.

In this disclosure, when "less than" or "greater than" is used for comparison, "less than" may also be replaced with "less than or equal to", and "greater than" may also be replaced with "greater than or equal to".

In various embodiments of this disclosure, unless otherwise stated or there is a logic conflict, terms and/or descriptions in different examples are consistent and may be mutually referenced, and technical features in different examples may be combined based on an internal logical relationship thereof, to form a new example.

It may be understood that, various numbers in examples of this disclosure are merely used for differentiation for ease of description, and are not used to limit the scope of examples of this disclosure. The sequence numbers of the foregoing processes do not mean execution orders, and the execution orders of the processes should be determined based on functions and internal logic of the processes.

The network architecture and the service scenario described in this disclosure are intended to describe the technical solutions in this disclosure more clearly, and do not constitute a limitation on the technical solutions provided in this disclosure. A person of ordinary skill in the art may know that, with evolution of the network architecture and emergence of new service scenarios, the technical solutions provided in this disclosure are also applicable to similar technical problems.

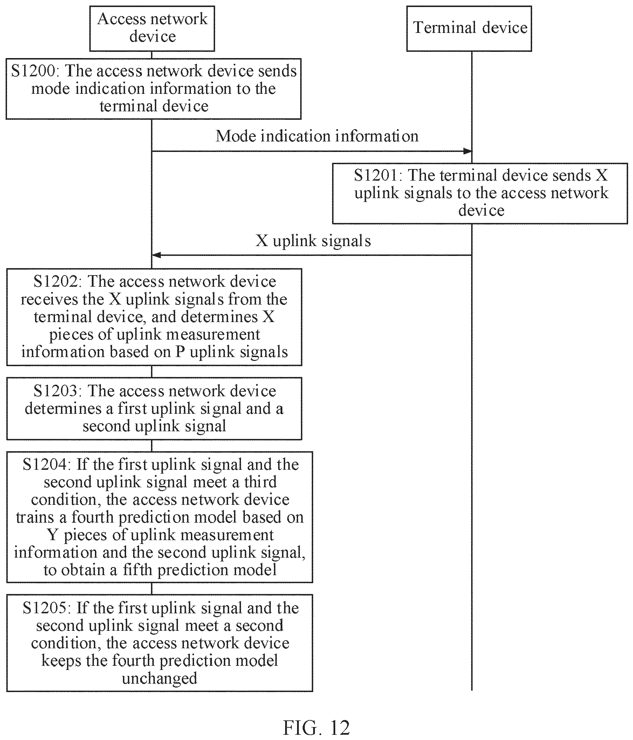

An uplink direction and a downlink direction are separately described in this disclosure. Specifically, procedures shown in FIG. 5 to FIG. 11 relate to the downlink direction, and a procedure shown in FIG. 12 relates to the uplink direction.

Optionally, before the method provided in this disclosure is performed, capability exchange and/or model information exchange may be further performed between a terminal device and an access network device. Details may be shown in FIG. 5. FIG. 5 is a schematic flowchart of capability exchange and/or model information exchange according to this disclosure. The following steps are included.

S501: A terminal device reports capability information to an access network device.

The capability information may include but is not limited to at least one of the following information: whether the terminal device supports running of an artificial intelligence model; a supported artificial intelligence model type (for example, a convolutional neural network (convolutional neural network, CNN), a recursive neural network (recursive neural network, RNN), or a random forest model); a size of memory space that may be used by the terminal device to store the artificial intelligence model; computing power information of the terminal device, which may be a computing capability for running the artificial intelligence model, for example, information such as a computing speed of a processor and/or a volume of data that can be processed by the processor; energy consumption information of the terminal device, for example, running power consumption of a chip and/or a battery capacity; or hardware information of the terminal device, which includes but is not limited to configuration information (a quantity of antennas and/or a polarization direction) of an antenna, a quantity of radio frequency channels, and/or the like.

The terminal device may actively report the capability information, or may report the capability information when receiving a request message from the access network device. This is not limited in this disclosure.

S501 is an optional operation. For example, when a capability of the terminal device is agreed on in a protocol, the method shown in FIG. 5 does not need to include S501.

S502: The access network device sends information about a first prediction model to the terminal device.

The access network device may send the information about the first prediction model when determining that the terminal device supports running of the artificial intelligence model. Alternatively, the access network device may not send the information about the first prediction model. In other words, S502 is an optional operation. For example, the first prediction model may be agreed on in a protocol, or the access network device and the terminal device download the first prediction model through an identical download address.

In a first possible implementation, the information about the first prediction model may be information including a model parameter, a model structure, a cascading relationship, an activation function, and the like used to describe the first prediction model. The terminal device may determine the first prediction model based on the information about the first prediction model. In a second possible implementation, the information about the first prediction model may alternatively be computer code that describes the first prediction model, and the terminal device may compile the computer code, to obtain the first prediction model. In a third possible implementation, the information about the first prediction model may be a download address for downloading the first prediction model, and the terminal device may download the first prediction model based on the download address.

In this disclosure, the prediction model, for example, the first prediction model, the second prediction model, the third prediction model, or the fourth prediction model described below, may be the artificial intelligence model. Specifically, the prediction model may be a trained artificial intelligence model. The prediction model may be configured to predict a downlink signal with optimal signal quality received by the terminal device. For example, the optimal signal quality may mean that a reference signal received power (reference signal received power, RSRP) of a signal is the largest, or may mean that a received signal-to-noise ratio of a signal is the largest, or the like. This is not limited.

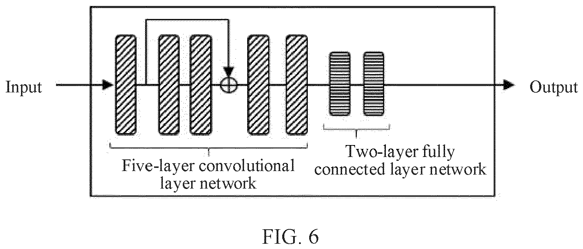

For example, FIG. 6 is a diagram of a structure of an artificial intelligence model according to this disclosure. A type of the artificial intelligence model may be a neural network model, a random forest model, a linear regression model, or the like. This is not limited in this disclosure. The artificial intelligence model includes a five-layer convolutional network and a two-layer fully connected network. This is merely an example, and does not represent any limitation on quantities of convolutional layer networks and fully connected layer networks and a connection relationship between the convolutional layer network and the fully connected layer network. The convolutional layer network processes an obtained input and transmits the input to the fully connected layer network. The fully connected layer network finally outputs a result. For example, an input of the artificial intelligence model may be measurement information obtained based on a radio signal, and an output of the artificial intelligence model is a codeword index or a beam index corresponding to a predicted optimal radio signal. Frequency domain is used as an example. A propagation form of the radio signal on a channel is $Y_i = H_i \times X_i + N$, where $H_i$ is a frequency domain channel response used when an $i^{th}$ beam is transmitted, $X_i$ is a radio signal transmitted by using the $i^{th}$ beam, $N$ is noise, and $Y_i$ is a received signal, i is an integer. The artificial intelligence model may obtain, through prediction by using measurement information of a plurality of received signals $Y_i$, a beam that transmits a radio signal with optimal signal quality or highest signal strength, that is, determine a beam that is an optimal beam. The measurement information of the received signal $Y_i$ may be a reference signal received power of $Y_i$, channel estimation of $H_i$, and/or the received signal $Y_i$. Time domain is used as an example. A propagation form of the radio signal on a channel is $y_i = h_i \otimes x_i + n_0$, where $h_i$ is a time domain channel response when an $i^{th}$ beam is transmitted, $x_i$ is a radio signal transmitted by using the $i^{th}$ beam, $n_0$ is noise, $y_i$ is a received signal, i is an integer, and $\otimes$ represents time domain convolution. The artificial intelligence model may obtain, through prediction by using measurement information of a plurality of received signals $y_i$, a beam that transmits a radio signal with optimal signal quality or highest signal strength, that is, determine a beam that is an optimal beam. The measurement information of the received signal $y_i$ may be a reference signal received power of $y_i$, channel estimation of $h_i$, and/or the received signal $y_i$.

It is assumed that a codebook of the access network device includes $C$ codewords, in other words, a full codebook includes $C$ codewords, and the $C$ codewords correspond to $C$ beams. In this disclosure, a scanning pattern of the access network device includes M codewords ($M \leq C$, and $M$ is greater than 0) in the codebook, and $g(Y_i)$ is measurement information of the received signal $Y_i$. In this case, a format of an input of a prediction model may be

$$\begin{bmatrix} g(Y_1) \\ \vdots \\ g(Y_M) \end{bmatrix}$$

. In other words, a dimension of input information is $M$-dimensional information, an output of the prediction model is a codeword index or a beam index corresponding to the predicted optimal radio signal, and a dimension of output information may be a one-dimensional scalar. Optionally, in the method, $\begin{bmatrix} g(Y_1) \\ \vdots \\ g(Y_M) \end{bmatrix}$ may be used as the input of the prediction model after preprocessing is performed, the output is the codeword index or the beam index corresponding to the predicted optimal radio signal, and the dimension of the output information may be the one-dimensional scalar. The preprocessing may include at least the following: A real part and an imaginary part are separated and are separately used inputs, the real part and the imaginary part are separated and spliced into $2M$-dimensional information, an amplitude and a phase are separated and are separately used as inputs, the amplitude and the phase are separated and spliced into the $2M$-dimensional information, and scaling, quantization, filtering, or the like is performed by using a scale factor. This is not limited.

In this disclosure, a model trained by a network side, for example, a first prediction model, a third prediction model, or a fourth prediction model, may be trained by the access network device, for example, trained by a near-real-time RIC, a CU, or a DU of the access network device. Alternatively, a pre-trained prediction model is obtained from a third-party network entity. For example, an AI entity performs training, and the access network device obtains a trained first prediction model from the AI entity. Optionally, the AI entity is located in OAM or a core network device. A specific training process of the prediction model is not limited in this disclosure. For example, for the first prediction model, training data needed for training the prediction model is the measurement information, and the training data may be generated based on $Y_i = H_i \times X_i + N$. The channel response $H_i$ may be generated by using a channel model that meets a definition of the 3rd generation partnership project (the 3rd generation partnership project, 3GPP), collected in an actual environment, or generated by another simulation platform, such as a ray tracking channel simulation platform. This is not limited in this disclosure.

In this disclosure, a plurality of prediction models may be trained, and each prediction model corresponds to one scanning pattern. The access network device may configure, for the terminal device based on the scanning pattern configured for the terminal device, a prediction model corresponding to the scanning pattern.

In this disclosure, an identical artificial intelligence model may be deployed on the access network device and the terminal device.

In an implementation, the first prediction model is also deployed on the access network device, or an artificial intelligence model with an identical parameter is deployed on the access network device and the terminal device. That the artificial intelligence model with the same parameter is deployed on the access network device and the terminal device may mean: A model parameter, a model structure, a cascading relationship, an activation function, and the like of the artificial intelligence model deployed on the access network device are completely the same as those of the artificial intelligence model deployed on the terminal device.

In another implementation, information such as the model structure of the artificial intelligence model in the access network device may be different from that of the artificial intelligence model in the terminal device. However, when input information is the same, output information is the same or a difference between output information is less than or equal to a threshold. In other words, if the access network device and the terminal device agree on an identical model input data format and input same measurement information, an identical prediction result may be output through respective artificial intelligence models.

After the first prediction model is deployed on the terminal device, the access network device may send a downlink signal to the terminal device, so that the terminal device may input, into the first prediction model, estimated downlink measurement information to be obtained by measuring the downlink signal, to determine whether a prediction result of the first prediction model is accurate. The following provides description in detail.

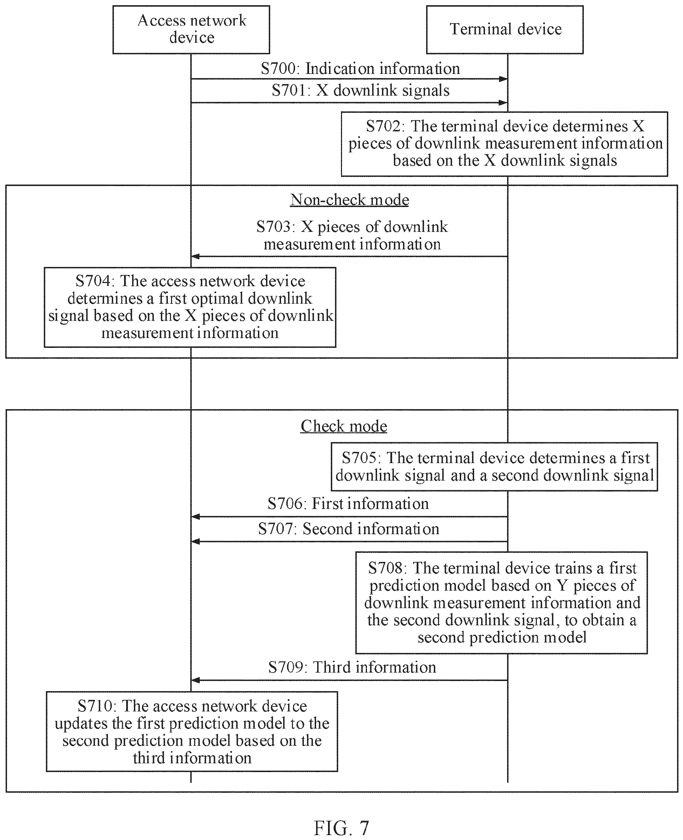

FIG. 7 is a schematic flowchart of a communication method according to this disclosure. The procedure is described by using an example of interaction between a terminal device and an access network device. In the procedure shown in FIG. 7, an identical prediction model may be deployed on the terminal device and the access network device, and the access network device may predict, by using the prediction model, a downlink signal with highest received signal strength in downlink signals received by the terminal device. The terminal device may check a prediction result of the deployed prediction model, and when the prediction result is inaccurate, may send feedback to the access network device. Specifically, the method includes the following steps.

Optionally, S700: The access network device sends indication information to the terminal device.

The indication information may indicate at least one of the following information.

(1) Scanning pattern information, indicating a scanning pattern. The scanning pattern indicates one or more codewords selected by the access network device from a codebook and an order of selecting the codewords. Because one codeword corresponds to one beam, the scanning pattern may also indicate one or more beams used by the access network device and a sending order of the beams. Information such as codewords in the codebook that are used by the access network device, a use order of the codewords, beams that are used, and a sending order of the beams may be determined by using the scanning pattern. Optionally, the indication information may not include the scanning pattern information. For example, the scanning pattern information may be agreed on in a protocol or set in another manner. This is not limited in this disclosure.

(2) Format information of an input and an output of the prediction model, indicating information such as a dimension of input information and a dimension of output information of the prediction model. For example, when the scanning pattern indicates M codewords, and an output is a codeword index corresponding to an optimal downlink signal, the dimension of the input information is M, and the dimension of the output information is 1. Optionally, the indication information may not include the format information of the input and the output of the prediction model. For example, the format information of the input and the output of the prediction model may be agreed on in a protocol or set in another manner. This is not limited in this disclosure.

(3) Check mode information, indicating whether the terminal device enters a check mode, or indicating a mode used by the access network device to send the downlink signal.

In this disclosure, the access network device may send the downlink signal in two modes: a first mode and a second mode. The first mode may also be referred to as the check mode, and the second mode may also be referred to as a non-check mode. In a possible implementation, when sending the downlink signal in the first mode, the access network device may indicate, through the check mode information, the terminal device to enter the check mode; or when sending the downlink signal in the second mode, the access network device may indicate, through the check mode information, the terminal device to enter the non-check mode. In another possible implementation, the access network device may further configure a resource that is in the check mode or the non-check mode, so that the terminal device enters the check mode or the non-check mode. For example, the resource in the check mode is periodic or aperiodic. When the access network device periodically or aperiodically scans beams corresponding to all codewords in the codebook, the terminal device enters the check mode. When the access network device scans beams corresponding to some codewords in the codebook, the terminal device enters the non-check mode.

In this disclosure, the access network device includes a, the codebook includes one or more codewords, each codeword may be for precoding a signal, and a precoded signal is propagated in space based on specific spatial directivity, to form a beamforming effect, that is, one codeword corresponds to one beam or one data transmission direction.

In the check mode, all the codewords in the codebook are selected by the access network device. In other words, all the codewords in the codebook are used to send the downlink signal, and beams corresponding to all the codewords in the codebook are sent.

In the non-check mode, the access network device may select some codewords from the codebook based on the scanning pattern. In other words, a codeword that is indicated by the scanning pattern and that is in the codebook is for sending the downlink signal, and another codeword is not for sending the downlink signal.

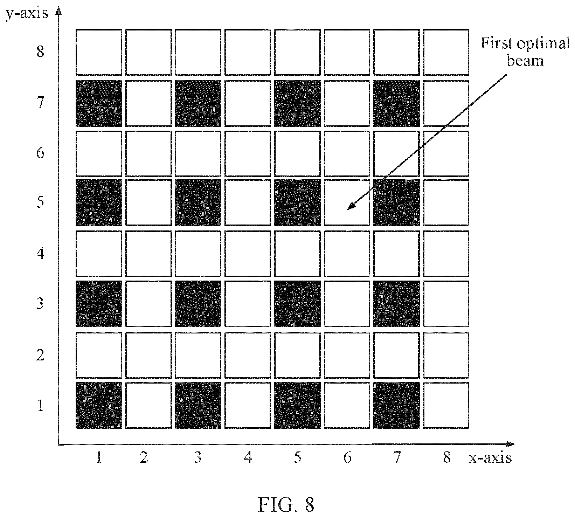

For example, as shown in FIG. 8, that a codebook includes 64 codewords is used as an example. In FIG. 8, one grid represents one beam, one beam corresponds to one codeword, there are 64 beams in total, and different beams have different directions in space.

In the check mode, the access network device may sequentially send 64 downlink signals by using the 64 beams in an order of a horizontal angle and then a vertical angle, where one beam is for sending one downlink signal. Correspondingly, the terminal device sequentially receives, in the same order, the 64 downlink signals sent by using the 64 beams.

In FIG. 8, descriptions are provided by using an example in which a scanning pattern indicates 16 beams corresponding to 16 codewords. The 16 beams are represented by small black grids in FIG. 8. A coordinate system is established by using a horizontal angle as an x-axis and a vertical angle as a y-axis, and position coordinates of the 16 beams are respectively (1, 1), (1, 3), (1, 5), (1, 7), (3, 1), (3, 3), (3, 5), (3, 7), (5, 1), (5, 3), (5, 5), (5, 7), (7, 1), (7, 3), (7, 5), and (7, 7). In the non-check mode, the access network device may sequentially send the downlink signal by using one or more beams indicated by the scanning pattern in an order of the horizontal angle and then the vertical angle. Correspondingly, the terminal device sequentially receives the downlink signal in the same order.

In the foregoing example, an order in which the access network device sends the beams is merely an example, and does not represent a limitation on the order. The access network device and the terminal device may alternatively use another order. This is not limited.

S701: The access network device sends X downlink signals to the terminal device, and correspondingly, the terminal device receives the X downlink signals from the access network device.

X may be an integer greater than 1. Optionally, different downlink signals in the X downlink signals may be sent in a time division manner; and/or different downlink signals in the X downlink signals may be sent in a frequency division manner. For example, the access network device sends different downlink signals at different frequencies by using different beams and different antenna panels.

A type of the downlink signal is not limited. The downlink signal may be a downlink reference signal, for example, may be a channel state information downlink signal (channel state information reference signal, CSI-RS). Alternatively, the downlink signal may be a signal of another type, for example, a synchronization signal and physical broadcast channel block (synchronization signal and physical broadcast channel block, SSB). This is not limited in this disclosure. Optionally, the synchronization signal may include a primary synchronization signal (primary synchronization signal, PSS) and a secondary synchronization signal (secondary synchronization signal, SSS). The SSB includes the PSS, the SSS, and a PBCH. The SSB may further include a demodulation reference signal (demodulation reference signal, DMRS) of the PBCH.

For any downlink signal in the X downlink signals, when sending the downlink signal, the access network device precodes the downlink signal by using one codeword. In other words, the downlink signal corresponds to one beam or one data transmission direction. The terminal device may receive the downlink signal by using one codeword. The codeword used by the terminal device to receive the downlink signal may be determined by the terminal device. How to specifically determine the codeword is not limited in this disclosure.

When the access network device sends the downlink signal in the check mode, a value of X may be equal to a quantity of codewords included in the codebook of the access network device. When the access network device sends the downlink signal in the non-check mode, a value of X may be equal to a quantity of codewords (or a quantity of beams) indicated by the scanning pattern.

S702: The terminal device determines X pieces of downlink measurement information based on the X downlink signals.

The terminal device may obtain one piece of downlink measurement information based on one downlink signal. The downlink measurement information may be an RSRP obtained by measuring the downlink signal, or may be a received value of the downlink signal, or may be other information obtained by measuring the downlink signal.

If the indication information in S700 indicates the terminal device to enter the non-check mode, S703 and S704 may be performed.

S703: The terminal device sends the X pieces of downlink measurement information to the access network device, and correspondingly, the access network device receives the X pieces of downlink measurement information.

S704: The access network device determines a first optimal downlink signal based on the X pieces of downlink measurement information.

The first optimal downlink signal is a downlink signal determined based on an output of a first prediction model, and an input of the first prediction model is determined based on the X pieces of downlink measurement information.

It is assumed that the codebook of the access network device includes C codewords, and the access network device may send C beams in different directions through the C codewords, where C is an integer greater than 0. Because the access network device sends the downlink signal in the non-check mode, in this case, X is less than or equal to C.

In this step, the first optimal downlink signal may refer to a downlink signal that is obtained through prediction, that is with best signal quality, and that is received by the terminal device, and is not a downlink signal that is with best signal quality and that is obtained through actual measurement. In other words, the access network device does not actually send C downlink signals, but sends only the X downlink signals. The first optimal downlink signal predicted by the access network device through the first prediction model may be one of the X downlink signals, or may not be one of the X downlink signals. The first optimal downlink signal obtained through prediction is one of the C downlink signals.

For example, with reference to the foregoing example in FIG. 8, it is assumed that the X downlink signals sent by the access network device are sent through the 16 beams indicated by the scanning pattern. A first optimal beam corresponding to the first optimal downlink signal actually obtained by the access network device through prediction may not be any one of the 16 beams. For example, the predicted first optimal beam may be a beam whose position coordinates are (6, 5) in FIG. 8, namely, a beam indicated by an arrow in FIG. 8.

After determining the first optimal downlink signal, the access network device may send downlink data to the terminal device through the first optimal beam corresponding to the first optimal downlink signal.

S704 may be further understood as follows: The access network device determines a first optimal codeword (or the first optimal beam) based on the X pieces of downlink measurement information, and the access network device may send the downlink data to the terminal device through the first optimal codeword (or the first optimal beam). To be specific, the access network device may obtain, through prediction based on the model, a codeword corresponding to the downlink signal with the best signal quality.

According to the foregoing method, the access network device needs to send only a few downlink signals, so that an optimal downlink signal can be obtained through prediction based on the downlink measurement information, to determine an optimal beam used for communication, thereby quickly completing beam alignment with low air interface overheads.

If the indication information in S700 indicates the terminal device to enter the check mode, the following procedures may be performed.

S705: The terminal device determines a first downlink signal and a second downlink signal.

The first downlink signal and the second downlink signal are downlink signals in the X downlink signals. The first downlink signal is a downlink signal obtained through prediction based on a part of the X pieces of downlink measurement information, and the second downlink signal is a downlink signal determined based on the X pieces of downlink measurement information.

Specifically, the first downlink signal is a downlink signal determined based on an output of the first prediction model, an input of the first prediction model is determined based on Y pieces of downlink measurement information in the X pieces of downlink measurement information, and Y is an integer less than or equal to X and greater than 0. Optionally, the Y pieces of downlink measurement information may be determined based on the scanning pattern. For example, Y downlink signals corresponding to the Y pieces of downlink measurement information are downlink signals sent through Y beams indicated by the scanning pattern. In this case, a value of Y is equal to a quantity of beams indicated by the scanning pattern.

In this disclosure, a downlink signal, a codeword, and a beam correspond to each other, one downlink signal corresponds to one codeword, the codeword is for precoding the downlink signal, and a transmission direction of the precoded signal is a direction indicated by the beam. The prediction model obtains the downlink signal through prediction, which may be alternatively replaced with a case in which the prediction model obtains a codeword through prediction, or obtains a beam through prediction. Similarly, the scanning pattern indicates a scanned signal, which may be alternatively replaced with a case in which the scanning pattern indicates a scanned codeword or a scanned beam.

The second downlink signal is a downlink signal that corresponds to downlink measurement information with optimal corresponding signal quality in the X pieces of downlink measurement information. For example, if the downlink measurement information is the RSRP, a downlink signal corresponding to an RSRP with a maximum value in the X RSRPs may be used as the second downlink signal.

The terminal device may determine, based on the second downlink signal, whether the first downlink signal predicted based on the first prediction model is accurate. For details, refer to the following descriptions.

S706: If the first downlink signal and the second downlink signal meet a first condition, the terminal device sends first information to the access network device, and correspondingly, the access network device receives the first information from the terminal device.

When the first downlink signal and the second downlink signal meet the first condition, the terminal device may consider that a prediction result of the first prediction model is inaccurate, and the first prediction model needs to be updated. In this case, in a possible implementation, the first information indicates the second downlink signal and the Y pieces of downlink measurement information, and the foregoing information may be for updating the first prediction model. How to specifically update the first prediction model is described in detail below. In another possible implementation, the first information indicates that the first prediction model needs to be updated.

The first condition may include any one of the following:

The first downlink signal and the second downlink signal are not an identical downlink signal; or

the first downlink signal and the second downlink signal are not an identical downlink signal, and difference information between the first downlink signal and the second downlink signal is greater than a first threshold. The first threshold may be configured by the access network device, or may be agreed on in a protocol, or may be determined by the terminal device.

In this disclosure, in a first implementation, the difference information between the first downlink signal and the second downlink signal is an absolute value of a difference between first downlink measurement information corresponding to the first downlink signal and second downlink measurement information corresponding to the second downlink signal. For example, if a value of the first downlink measurement information is R1, and a value of the second downlink measurement information is R2, the difference information may be |R1-R2|.

In a second implementation, the difference information between the first downlink signal and the second downlink signal is an absolute value of a difference between first position information corresponding to the first downlink signal and second position information corresponding to the second downlink signal.

In this disclosure, the difference between the first position information and the second position information may be a Euclidean distance between the first position information and the second position information.

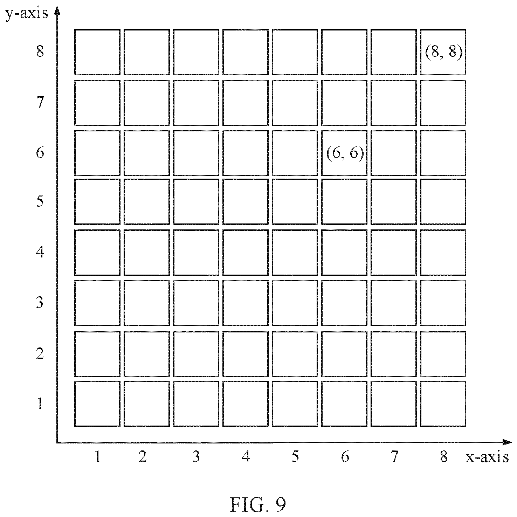

For example, as shown in FIG. 9, that a codebook includes 64 codewords is used as an example. One beam corresponds to one codeword, and there are 64 beams in total. Because one beam points to one transmission direction, 64 beams may represent 64 transmission directions. It is assumed that the 64 beams are approximately arranged in a grid shape, a horizontal angle includes eight rows, and a vertical angle includes eight columns. From a perspective of a cross section of a transmission direction, the 64 beams may approximately form 64 grids shown in FIG. 9, and one grid in FIG. 9 represents one beam. A coordinate system is established by using a horizontal angle as an x-axis and a vertical angle as a y-axis. In FIG. 9, descriptions are provided by using an example in which the position information of the first downlink signal is (6, 6) and the position information of the second downlink signal is (8, 8). In this case, a Euclidean distance between the first position information corresponding to the first downlink signal and the second position information corresponding to the second downlink signal may meet the following form.

$$\|(8,8) - (6,6)\| = 2\sqrt{2}$$

Position information corresponding to a downlink signal may be indicated by the access network device to the terminal device, or may be agreed on in advance.

S707: If the first downlink signal and the second downlink signal meet a second condition, the terminal device sends second information to the access network device, and correspondingly, the access network device receives the second information from the terminal device.

When the first downlink signal and the second downlink signal meet the second condition, the terminal device may consider that the prediction result of the first prediction model is accurate, and the first prediction model does not need to be updated. In this case, in a possible implementation, the second information may indicate the second downlink signal. In another possible implementation, the second information may indicate that the first prediction model is trusted, or that the first prediction model does not need to be updated.

The second condition may include any one of the following:

The first downlink signal and the second downlink signal are an identical downlink signal; or

the first downlink signal and the second downlink signal are not an identical downlink signal, but the difference information between the first downlink signal and the second downlink signal is less than or equal to the first threshold.

In this disclosure, S706 and S707 may be alternatively replaced with the following step A or step B.

Step A: The terminal device sends first information or second information to the access network device based on the first downlink signal and the second downlink signal. Correspondingly, the access network device receives the first information or the second information from the terminal device.

The first information may be sent when the first downlink signal and the second downlink signal meet a first condition, and the second information may be sent when the first downlink signal and the second downlink signal meet a second condition.

The first information indicates that the first prediction model needs to be updated, or indicates the second downlink signal and the Y pieces of downlink measurement information. The second information indicates that the first prediction model is trusted, or the second information indicates that the first prediction model does not need to be updated, or indicates that the second information does not include the Y pieces of downlink measurement information. The second information may further indicate the second downlink signal.

Step B: The terminal device sends the first information or does not send the first information to the access network device based on the first downlink signal and the second downlink signal. Correspondingly, the access network device detects the first information from the terminal device.

Descriptions of the first information are the same as descriptions in step A. If detecting the first information, the access network device considers that the first prediction model needs to be updated; if detecting no first information, the access network device considers that the first prediction model does not need to be updated.

In this disclosure, the first prediction model may be updated by the terminal device, or the first prediction model may be updated by the access network device. The following separately provides descriptions.

When the terminal device updates the first prediction model, the following procedures may be performed.

S708: The terminal device trains the first prediction model based on the Y pieces of downlink measurement information and the second downlink signal, to obtain a second prediction model.

The terminal device may use the Y pieces of downlink measurement information and the second downlink signal as a group of training data, and perform update training on the first prediction model. A trained model is denoted as the second prediction model. The terminal device may update the first prediction model to the second prediction model. A specific method for updating the first prediction model to the second prediction model is not limited in this disclosure, for example, may be using a back propagation gradient update algorithm.

After obtaining the second prediction model, the terminal device may indicate the second prediction model in a plurality of manners.

S709: The terminal device sends third information to the access network device, and correspondingly, the access network device receives the third information from the terminal device.

In a possible implementation, the third information indicates the second prediction model. Specifically, the third information may include information including a model parameter, a model structure, a cascading relationship, an activation function, and the like used to describe the second prediction model. The access network device may determine the second prediction model based on the third information. For example, the second prediction model includes a multi-layer convolutional layer network and a multi-layer fully connected layer network, and each layer may include one or more neurons. Correspondingly, the model parameter may include information such as a weight corresponding to each neuron in the second prediction model. The model structure may include a quantity of convolutional layer networks and a quantity of fully connected layer networks in the second prediction model, a connection relationship between the convolutional layer network and the fully connected layer network, and the like.

The third information may also include computer code that describes the second prediction model, and the access network device may perform compilation based on the computer code, to obtain the second prediction model.

In another possible implementation, the third information indicates information about the second prediction model, and the information about the second prediction model includes variation information between the second prediction model and the first prediction model. Specifically, the third information may include the variation information. The variation information refers to a variation between the information including a model parameter, a model structure, a cascading relationship, an activation function, and the like used to describe the second prediction model, and information including a model parameter, a model structure, a cascading relationship, an activation function, and the like used to describe the first prediction model.

In another possible implementation, the third information indicates information about the second prediction model, and the information about the second prediction model includes gradient information of the second prediction model. Specifically, the third information may include a gradient calculation value that is when the first prediction model is updated to the second prediction model by using a gradient descent method.

S710: The access network device updates the first prediction model to the second prediction model based on the third information.

According to the foregoing method, the terminal device may perform prediction by using the locally configured first prediction model. When the terminal device determines that the predicted first downlink signal is inconsistent, due to a channel environment change or mismatch between a prediction model and a channel environment, with the second downlink signal determined based on the actual downlink measurement information, the terminal device may calibrate the first prediction model, in other words, retrain the first prediction model, to obtain an updated prediction model, and therefore, performance of the prediction model can be continuously improved.

In this disclosure, in a first scenario, provided that the first prediction model is updated, the terminal device indicates the second prediction model to the access network device, that is, performs S709.

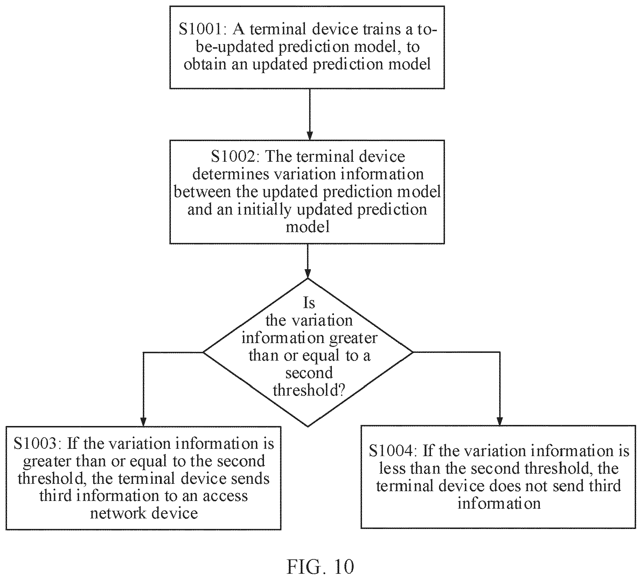

In a second scenario, the terminal device may determine whether the variation information between the second prediction model and the first prediction model is greater than a second threshold; and send the third information when the variation information is greater than or equal to the second threshold; or may not send the third information when the variation information is less than the second threshold. To avoid loss of generality, this disclosure describes, by using the procedure shown in FIG. 10 as an example, how a terminal device determines whether to send third information.

S1001: The terminal device trains a to-be-updated prediction model, to obtain an updated prediction model.

An initial value of the to-be-updated prediction model is a first prediction model, and the to-be-updated prediction model is a prediction model currently deployed on the terminal device. The updated prediction model is obtained through training in S708. Assuming that the to-be-updated prediction model is the first prediction model, the updated prediction model obtained in this case is a second prediction model.

It is assumed that several terminal devices have an identical to-be-updated prediction model. These terminal devices train the to-be-updated prediction model, and feed back training gradient information, or the updated prediction model, or a variation between the updated prediction model and the to-be-updated prediction model to the access network device. The access network device generates a fused new prediction model based on the feedback of the terminal device, and then sends the fused new prediction model to these terminal devices to update the first prediction model.

S1002: The terminal device determines variation information between the updated prediction model and an initially updated prediction model.

An initial value of the initially updated prediction model is the first prediction model, and the initially updated prediction model may be a prediction model that is indicated to the access network device last time through the third information.

It is assumed that the updated prediction model is the second prediction model, and the initially updated prediction model herein is the first prediction model.

S1003: If the variation information is greater than or equal to a second threshold, the terminal device sends the third information to the access network device.

The second threshold may be configured by the access network device, or may be agreed on in a protocol, or may be determined by the terminal device.

S1004: If the variation information is less than the second threshold, the terminal device does not send the third information.

When training the to-be-updated prediction model next time, the terminal device may perform the procedure of S1001 to S 1004 again.

Because the variation information is less than the second threshold, it may be considered that the updated prediction model is not greatly different from the prediction model before the update, performance of the updated prediction model is close to that of the prediction model before the update, and a prediction result of the updated prediction model is close to that of the prediction model before the update. Therefore, the updated prediction model may not be indicated to the access network device.

With reference to the descriptions of the procedure shown in FIG. 10, in an example, it is assumed that the first prediction model is a prediction model A. The terminal device may perform the following procedures.

Step 1: Train the prediction model A, to obtain a prediction model B.

Step 2: Determine whether variation information between the prediction model A and the prediction model B is greater than or equal to a second threshold; and if the variation information between the prediction model A and the prediction model B is greater than or equal to the second threshold, go to step 3; or if the variation information between the prediction model A and the prediction model B is less than the second threshold, go to step 4.

Step 3: Send third information, where the third information in this step indicates information about the prediction model B.

Step 4: Skip sending the third information.

If the variation information in step 2 is less than the second threshold, the terminal device does not send the third information this time.

Further, assuming that the terminal device further needs to train the prediction model B, to obtain a prediction model C, the terminal device may perform the procedure shown in FIG. 10 again.

Step 5: Train the prediction model B, to obtain the prediction model C.

Step 6: Determine whether variation information between the prediction model C and the prediction model A is greater than or equal to the second threshold; and if the variation information between the prediction model C and the prediction model A is greater than or equal to the second threshold, go to step 7; or if the variation information between the prediction model C and the prediction model A is less than the second threshold, go to step 8.

Although the prediction model C is obtained by training the prediction model B, because the prediction model A is deployed on the access network device, and the terminal device does not indicate the prediction model A to the access network device, whether variation information between a latest prediction model in the terminal device and the prediction model in the access network device is greater than or equal to the second threshold needs to be determined.

Step 7: Send the third information, where the third information in this step indicates information about the prediction model C.

Step 8: Skip sending the third information.

According to the foregoing procedure, when the variation information between the updated prediction model and the prediction model indicated to the access network device last time is less than the second threshold, the updated prediction model may not be indicated to the access network device. This avoids frequently indicating the updated prediction model to the access network device, reduces signaling overheads, and improves system efficiency.

In this disclosure, the access network device may also update the first prediction model. When the access network device updates the first prediction model, the following procedures may be performed.

Step 1: The access network device trains the first prediction model based on Y pieces of downlink measurement information and a second downlink signal, to obtain a third prediction model.

The access network device may use the Y pieces of downlink measurement information and the second downlink signal as a group of training data, and perform update training on the first prediction model. The trained model is the third prediction model. The second prediction model obtained by the terminal device through training in S708 and the third prediction model obtained by the access network device through training in step 1 may be an identical model or different models. In this disclosure, for ease of description, the second prediction model and the third prediction model are distinguished, which does not necessarily mean that the two models are different models.

The access network device may update the first prediction model to the third prediction model.

After obtaining the third prediction model, the access network device may indicate the third prediction model in a plurality of manners.

In a first implementation, the access network device may directly indicate the third prediction model to the terminal device, that is, perform step 2.

Step 2: The access network device sends fourth information to the terminal device, and correspondingly, the terminal device receives the fourth information from the access network device.

The fourth information indicates the third prediction model, or indicates information about the third prediction model, and the information about the third prediction model includes variation information between the third prediction model and the first prediction model. For specific content of the fourth information, refer to the descriptions of the third information. Details are not described herein again.

In a second implementation, the access network device may determine whether variation information between the third prediction model and the first prediction model is greater than a second threshold; and send fourth information when the variation information is greater than or equal to the second threshold; or may not send the fourth information when the variation information is less than the second threshold. A specific process is similar to the procedure shown in FIG. 10, and details are not described herein again.

Optionally, the access network device may not send the fourth information. When the first downlink signal and the second downlink signal of the terminal device meet a first condition, the terminal device and the access network device may separately retrain the first prediction model by using the second downlink signal and the Y pieces of downlink measurement information. In this method, the prediction models stored in the two devices can keep consistent with each other with few signaling overheads.

According to the foregoing method, when the terminal device determines that the predicted first downlink signal is inconsistent, due to a channel environment change or mismatch between a prediction model and a channel environment, with the second downlink signal determined based on the actual downlink measurement information, the terminal device may feed back the second downlink signal and the Y pieces of downlink measurement information to the access network device, so that the access network device may calibrate the first prediction model based on the second downlink signal and the Y pieces of downlink measurement information, that is, retrain the first prediction model, to obtain an updated prediction model, and therefore, performance of the prediction model can be continuously improved.

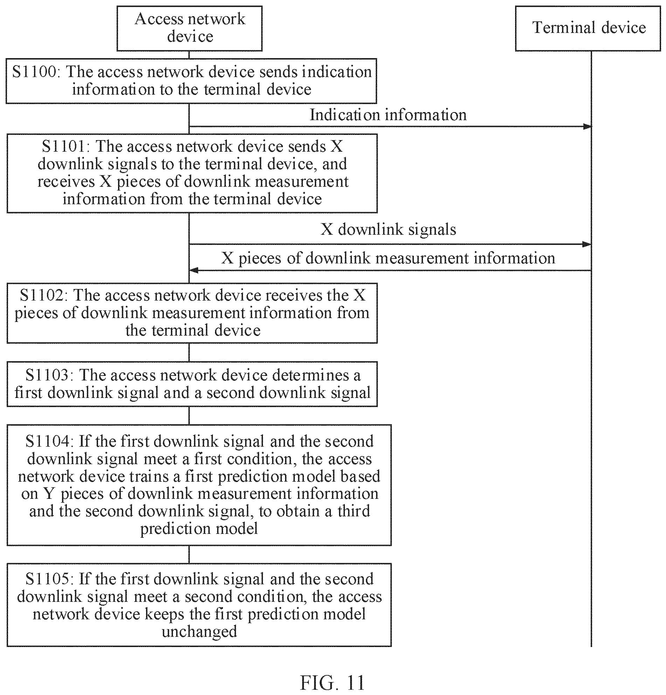

In this disclosure, the prediction model may alternatively not be deployed on the terminal device, but is deployed only in the access network device. The access network device checks the prediction model based on the information fed back by the terminal device. Specifically, FIG. 11 is a schematic flowchart of a communication method according to this disclosure. The method includes the following steps.

Optionally, S 1100: An access network device sends indication information to a terminal device.

For specific content of the indication information, refer to the descriptions in S700. Details are not described herein again.

S1101: The access network device sends X downlink signals to the terminal device.

S1102: The access network device receives X pieces of downlink measurement information from the terminal device.

The X pieces of downlink measurement information are determined based on the X downlink signals.

S1103: The access network device determines a first downlink signal and a second downlink signal.

The first downlink signal and the second downlink signal are downlink signals in the X downlink signals, the first downlink signal is a downlink signal determined based on an output of a first prediction model, an input of the first prediction model is determined based on Y pieces of downlink measurement information in the X pieces of downlink measurement information, and the second downlink signal is determined based on the X pieces of downlink measurement information.

For specific content of S1103, refer to the descriptions in S705. Details are not described herein again.

S1104: If the first downlink signal and the second downlink signal meet a first condition, the access network device trains the first prediction model based on the Y pieces of downlink measurement information and the second downlink signal, to obtain a third prediction model.

For specific content of S1104, refer to the descriptions in S706. Details are not described herein again.

Further, the access network device may update the first prediction model to the third prediction model.

S1105: If the first downlink signal and the second downlink signal meet a second condition, the access network device keeps the first prediction model unchanged.

For specific content of S1105, refer to the descriptions in S707. Details are not described herein again.

According to the foregoing method, only the first prediction model needs to be deployed on the access network device. When the access network device determines that the predicted first downlink signal is inconsistent, due to a channel environment change or mismatch between a prediction model and a channel environment, with the second downlink signal determined based on the actual downlink measurement information, the access network device may calibrate the first prediction model based on the second downlink signal and the Y pieces of downlink measurement information, that is, retrain the first prediction model, to obtain an updated prediction model, and therefore, performance of the prediction model can be continuously improved.

The method provided in this disclosure is further applicable to signal transmission in an uplink direction. For example, in the uplink direction, when communication is needed, the access network device scans, in a specific order, candidate codewords that are in a codebook: The access network device receives an uplink signal from the terminal device by using a beam corresponding to each of the candidate codewords that are in the codebook. The access network device finally selects a beam corresponding to an uplink signal with highest received signal strength as an optimal beam, and receives uplink data from the terminal device by using the beam.

In this disclosure, a prediction model may be deployed on the access network device, and the uplink signal with the highest received signal strength may be predicted based only on a small quantity of uplink signals, to avoid a case in which the terminal device needs to send a large quantity of uplink signals, to determine the uplink signal with the highest signal strength, reduce resource overheads, reduce energy consumption of the terminal, and improve communication efficiency.

FIG. 12 is a schematic flowchart of a communication method according to this disclosure. The method includes the following steps.

Optionally, S 1200: An access network device sends mode indication information to a terminal device.

In this disclosure, the terminal device may send an uplink signal in two modes: a third mode and a fourth mode. The third mode may also be referred to as a check mode, and the fourth mode may also be referred to as a non-check mode.

In a possible implementation, the access network device may indicate, through mode indication information, the terminal device whether to enter the check mode. In another possible implementation, a time period in which the terminal device enters the check mode may be agreed on in a protocol or agreed on in advance by the access network device and the terminal device through signaling. The terminal device sends the uplink signal in the check mode in the time period, and sends the uplink signal in the non-check mode in another time period. Alternatively, a time period in which the terminal device enters the non-check mode may be agreed on in a protocol or agreed on in advance by the access network device and the terminal device through signaling. The terminal device sends the uplink signal in the non-check mode in the time period, and sends the uplink signal in the check mode in another time period.

Before the terminal device sends the uplink signal by using the first mode, the access network device may indicate, through check mode information, the terminal device to enter the check mode. Before the terminal device sends the downlink signal by using the second mode, the access network device may indicate, through the check mode information, the terminal device to enter the non-check mode.

If the terminal device enters the check mode, the terminal device needs to send X uplink signals in one sending periodicity. If the terminal device does not enter the check mode, in other words, the terminal device enters the non-check mode, the terminal device needs to send Y uplink signals in one sending periodicity.

The uplink signal may be an uplink reference signal. A specific signal class is not limited in this disclosure. X is an integer greater than 1, and Y is an integer less than X and greater than 0. A value of X may be equal to a quantity of codewords included in the codebook in the access network device. For ease of understanding, X and Y are used for descriptions in both an uplink process and a downlink process in this disclosure. In practice, when the method in this disclosure is used in both the uplink process and the downlink process, a value of X in the uplink process may be the same as or different from a value of X in the downlink process. This is not limited. Similarly, a value of Y in the uplink process may be the same as or different from a value of Y in the downlink process. This is not limited. This rule is also applicable to other similar cases, and details are not described again.

If the terminal device enters the non-check mode, the terminal device sends the Y uplink signals to the access network device in one sending periodicity. Correspondingly, the access network device determines Y pieces of uplink measurement information based on the Y uplink signals, to predict an optimal uplink signal based on the Y pieces of uplink measurement information. A specific process is not described again.

If the terminal device enters the check mode, the following procedures may be performed.

S1201: The terminal device sends X uplink signals to the access network device.

S1202: The access network device receives the X uplink signals from the terminal device, and determines X pieces of uplink measurement information based on the X uplink signals.

The access network device may obtain one piece of uplink measurement information based on one uplink signal. The uplink measurement information may be an RSRP obtained by measuring the uplink signal, or may be the uplink signal, or may be other information obtained by measuring the uplink signal.

S1203: The access network device determines a first uplink signal and a second uplink signal.

The first uplink signal and the second uplink signal are uplink signals in the X uplink signals. The first uplink signal is an uplink signal obtained through prediction based on some uplink measurement information of the X pieces of uplink measurement information, and the second uplink signal is an uplink signal determined based on the X pieces of uplink measurement information.

Specifically, the first uplink signal is an uplink signal determined based on an output of a fourth prediction model, an input of the fourth prediction model is determined based on Y pieces of uplink measurement information in the X pieces of uplink measurement information, and the second uplink signal is determined based on the X pieces of uplink measurement information.

S 1204: If the first uplink signal and the second uplink signal meet a third condition, the access network device trains the fourth prediction model based on the Y pieces of uplink measurement information and the second uplink signal, to obtain a fifth prediction model.

Further, the access network device may update the fourth prediction model to the fifth prediction model.

The third condition may include any one of the following:

The first uplink signal and the second uplink signal are not an identical uplink signal; and
the first uplink signal and the second uplink signal are not an identical uplink signal, and the difference information between the first uplink signal and the second uplink signal is greater than the third threshold. The third threshold may be configured by the access network device, or may be agreed on in a protocol, or may be determined by the terminal device.

In a possible implementation, the difference information between the first uplink signal and the second uplink signal is an absolute value of a difference between first uplink measurement information corresponding to the first uplink signal and second uplink measurement information corresponding to the second uplink signal.

In another possible implementation, the difference information between the first uplink signal and the second uplink signal is an absolute value of a difference between position information corresponding to the first uplink signal and position information corresponding to the second uplink signal.

For specific content of the difference information, refer to the descriptions in S707. Details are not described herein again.

S1205: If the first uplink signal and the second uplink signal meet a second condition, the access network device keeps the fourth prediction model unchanged.

The fourth condition may include any one of the following:

The first uplink signal and the second uplink signal are an identical uplink signal; and
the first uplink signal and the second uplink signal are not an identical uplink signal, and the difference information between the first uplink signal and the second uplink signal is less than or equal to the third threshold.

According to the foregoing method, the fourth prediction model is deployed on the access network device. When the access network device determines that the predicted first uplink signal is inconsistent, due to a channel environment change or mismatch between a prediction model and the channel environment, with the second uplink signal determined based on the actual uplink measurement information, the access network device may retrain the fourth prediction model based on the second uplink signal and the Y pieces of uplink measurement information, to obtain an updated prediction model, and therefore, performance of the prediction model can be continuously improved.

In the foregoing embodiments provided in this application, the method provided in embodiments of this application is described from a perspective of interaction between devices. To implement the functions in the methods provided in embodiments of this application, the access network device or the terminal device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

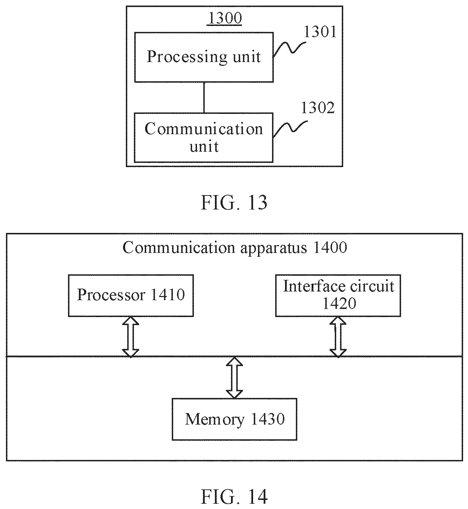

Same as the foregoing concept, as shown in FIG. 13, embodiments of this application further provide a communication apparatus 1300, configured to implement a function of the access network device or the terminal device in the foregoing methods. A form of the communication apparatus is not limited, and the communication apparatus may be a hardware structure, a software module, or a combination of a hardware structure and a software module. For example, the apparatus may be a software module or a chip system. In embodiments of this application, the chip system may include a chip, or may include a chip and another discrete component. The apparatus 1300 may include: a processing unit 1301 and a communication unit 1302.

In embodiments of this application, the communication unit may also be referred to as a transceiver unit, and may include a sending unit and/or a receiving unit, respectively configured to perform the sending and receiving steps performed by the access network device, the AI entity, or the terminal device in the foregoing method embodiments.

The following describes in detail the communication apparatus provided in embodiments of this application with reference to FIG. 13 and FIG. 14. It should be understood that, descriptions of apparatus embodiments correspond to the descriptions of the method embodiments. Therefore, for content that is not described in detail, refer to the method embodiments. For brevity, details are not described herein again.

The communication unit may also be referred to as a transceiver apparatus. The processing unit may also be referred to as a processing module, a processing apparatus, or the like. Optionally, a device configured to implement the receiving function in the communication unit 1302 may be considered as a receiving unit, and a device configured to implement the sending function in the communication unit 1302 may be considered as a sending unit. In other words, the communication unit 1302 includes the receiving unit and the sending unit. Sometimes, the communication unit may be implemented as a pin, a transceiver machine, a transceiver, a transceiver circuit, or the like. Sometimes, the processing unit may be implemented as a processor, a processing board, or the like. Sometimes, the receiving unit may be implemented as a pin, a receiver machine, a receiver, a receiving circuit, or the like. Sometimes, the sending unit may be implemented as a pin, a transmitter machine, a transmitter, a transmitting circuit, or the like.

When the communication apparatus 1300 performs a function of the terminal device in the procedure shown in FIG. 7 in the foregoing embodiment,

the processing unit is configured to determine X pieces of downlink measurement information based on X downlink signals from an access network device, where X is an integer greater than 1; and determine a first downlink signal and a second downlink signal, where the first downlink signal and the second downlink signal are downlink signals in the X downlink signals, the first downlink signal is a downlink signal determined based on an output of a first prediction model, an input of the first prediction model is determined based on Y pieces of downlink measurement information in the X pieces of downlink measurement information, the second downlink signal is determined based on the X pieces of downlink measurement information, and Y is an integer less than or equal to X and greater than 0; and

the communication unit is configured to send first information to the access network device if the first downlink signal and the second downlink signal meet a first condition, where the first information indicates the second downlink signal and the Y pieces of downlink measurement information, or the first information indicates that the first prediction model needs to be updated.

When the communication apparatus 1300 performs a function of the access network device in the procedure shown in FIG. 7 in the foregoing embodiment,

the processing unit is configured to send X downlink signals to a terminal device through the communication unit, where X is an integer greater than 1; and receive first information from the terminal device, where the first information indicates a second downlink signal and Y pieces of downlink measurement information in X pieces of downlink measurement information, or the first information indicates that a first prediction model needs to be updated; and

the second downlink signal is determined based on the X pieces of downlink measurement information, the X pieces of downlink measurement information are determined based on the X downlink signals, and Y is an integer less than or equal to X and greater than 0.

When the communication apparatus 1300 performs a function of the access network device in the procedure shown in FIG. 11 in the foregoing embodiment,

the communication unit is configured to send X downlink signals to a terminal device, and receive X pieces of downlink measurement information from the terminal device, where the X pieces of downlink measurement information are determined based on the X downlink signals, and X is an integer greater than 1; and
the processing unit is configured to determine a first downlink signal and a second downlink signal, where the first downlink signal and the second downlink signal are downlink signals in the X downlink signals, the first downlink signal is a downlink signal determined based on an output of a first prediction model, an input of the first prediction model is determined based on Y pieces of downlink measurement information in the X pieces of downlink measurement information, the second downlink signal is determined based on the X pieces of downlink measurement information, and Y is an integer less than or equal to X and greater than 0; and train the first prediction model based on the Y pieces of downlink measurement information and the second downlink signal if the first downlink signal and the second downlink signal meet a first condition, to obtain a third prediction model; and update the first prediction model to the third prediction model.

When the communication apparatus 1300 performs a function of the access network device in the procedure shown in FIG. 12 in the foregoing embodiment,

the communication unit is configured to receive X uplink signals from a terminal device, and determine X pieces of uplink measurement information based on the X uplink signals, where X is an integer greater than 1; and
the processing unit is configured to determine a first uplink signal and a second uplink signal, where the first uplink signal and the second uplink signal are uplink signals in the X uplink signals, the first uplink signal is an uplink signal determined based on an output of a fourth prediction model, an input of the fourth prediction model is determined based on Y pieces of uplink measurement information in the X pieces of uplink measurement information, the second uplink signal is determined based on the X pieces of uplink measurement information, and Y is an integer less than X and greater than 0; train the fourth prediction model based on the Y pieces of uplink measurement information and the second uplink signal if the first uplink signal and the second uplink signal meet a third condition, to obtain a fifth prediction model; and update the fourth prediction model to the fifth prediction model.

When the communication apparatus 1300 performs a function of the terminal device in the foregoing embodiment,

the communication unit is configured to determine X pieces of downlink measurement information based on X downlink signals from an access network device, where X is an integer greater than 1;
the processing unit is configured to determine a first downlink signal and a second downlink signal, where the first downlink signal and the second downlink signal are downlink signals in the X downlink signals, the first downlink signal is a downlink signal determined based on an output of a first prediction model, an input of the first prediction model is determined based on Y pieces of downlink measurement information in the X pieces of downlink measurement information, the second downlink signal is determined based on the X pieces of downlink measurement information, and Y is an integer less than or equal to X and greater than 0; and
the communication unit is configured to send first information or second information to the access network device based on the first downlink signal and the second downlink signal, where the first information indicates that the first prediction model needs to be updated, or the first information indicates the second downlink signal and the Y pieces of downlink measurement information; and the second information indicates that the first prediction model is trusted, or the second information indicates that the first prediction model does not need to be updated, or the second information indicates that the second information does not include the Y pieces of downlink measurement information.

When the communication apparatus 1300 performs a function of the access network device in the foregoing embodiment,
the communication unit is configured to send X downlink signals to a terminal device, where X is an integer greater than 1; and receive first information or second information from the terminal device, where the first information indicates a second downlink signal and Y pieces of downlink measurement information in X pieces of downlink measurement information, or the first information indicates that a first prediction model needs to be updated; the second information indicates the second downlink signal, or the second information indicates that the first prediction model does not need to be updated; and the second downlink signal is determined based on the X pieces of downlink measurement information, the X pieces of downlink measurement information are determined based on the X downlink signals, and Y is an integer less than or equal to X and greater than 0.

The foregoing is merely an example. The processing unit 1301 and the communication unit 1302 may further perform other functions. For more detailed description, refer to related descriptions in the method embodiments shown in FIG. 7, FIG. 11, or FIG. 12. Details are not described herein again.

FIG. 14 shows a communication apparatus 1400 according to an embodiment of this application. The apparatus shown in FIG. 14 may be an implementation of a hardware circuit of the apparatus shown in FIG. 13. The communication apparatus is applicable to the foregoing flowcharts, and performs the functions of the terminal device or the access network device in the foregoing method embodiments. For ease of description, FIG. 14 shows only main components of the communication apparatus.

As shown in FIG. 14, the communication apparatus 1400 includes a processor 1410 and an interface circuit 1420. The processor 1410 and the interface circuit 1420 are coupled to each other. It may be understood that, the interface circuit 1420 may be a transceiver, a pin, an interface circuit, or an input/output interface. Optionally, the communication apparatus 1400 may further include a memory 1430, configured to: store instructions to be executed by the processor 1410, store input data required for running instructions by the processor 1410, or store data generated after the processor 1410 runs instructions. Optionally, a part or all of the memory 1430 may be located in the processor 1410.

When the communication apparatus 1400 is configured to implement the method shown in FIG. 7, FIG. 11, or FIG. 12, the processor 1410 is configured to implement a function of the processing unit 1301, and the interface circuit 1420 is configured to implement a function of the communication unit 1302.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by an access network device to the terminal device. Alternatively, the chip in the terminal device sends information to another module (for example, a radio frequency module or an antenna) in the terminal device, where the information is sent by the terminal device to an access network device.

When the communication apparatus is a chip used in an access network device, the chip in the access network device implements a function of the access network device in the foregoing method embodiments. The chip in the access network device receives information from another module (for example, a radio frequency module or an antenna) in the access network device, where the information is sent by a terminal device to the access network device. Alternatively, the chip in the access network device sends information to another module (for example, a radio frequency module or an antenna) in the access network device, where the information is sent by the access network device to a terminal device.

As described above, in the method in FIG. 7, FIG. 11, or FIG. 12, exchange between the access network device and the terminal device is used as an example. When the AI entity is located outside the access network device and is an independent module or network element, the terminal device or the access network device may forward the second downlink signal and the Y pieces of downlink measurement information to the AI entity, the AI entity trains the first prediction model based on the second downlink signal and the Y pieces of downlink measurement information. The AI entity may indicate information about the trained second prediction model to the terminal device or the access network device. Other processes are similar to the procedure in FIG. 7, FIG. 11, or FIG. 12. Therefore, the foregoing descriptions about the access network device may be applied to the AI entity.

It may be understood that, the processor in this disclosure may be a central processing unit, or may be another general-purpose processor, a digital signal processor, an application-specific integrated circuit, a field programmable gate array or another programmable logic device, a transistor logic device, a hardware component, or any combination thereof. The general purpose processor may be a microprocessor or any regular processor.

The memory in this disclosure may be a random access memory, a flash memory, a read-only memory, a programmable read-only memory, an erasable programmable read-only memory, an electrically erasable programmable read-only memory, a register, a hard disk, a removable hard disk, or a storage medium of any other form well-known in the art.

A person skilled in the art may understand that, this disclosure may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that, computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A communication method, comprising:

   determining X pieces of downlink measurement information based on X downlink signals from an access network device, wherein X is an integer greater than 1;
   determining a first downlink signal and a second downlink signal, wherein the first downlink signal and the second downlink signal are downlink signals in the X downlink signals, the first downlink signal is a downlink signal determined based on an output of a first prediction model, an input of the first prediction model is determined based on Y pieces of downlink measurement information in the X pieces of downlink measurement information, the second downlink signal is determined based on the X pieces of downlink measurement information, and Y is an integer less than or equal to X and greater than 0; and
   sending first information to the access network device if the first downlink signal and the second downlink signal meet a first condition, wherein the first information indicates the second downlink signal and the Y pieces of downlink measurement information, or the first information indicates that the first prediction model needs to be updated.

2. A communication method, comprising:

   determining X pieces of downlink measurement information based on X downlink signals from an access network device, wherein X is an integer greater than 1;
   determining a first downlink signal and a second downlink signal, wherein the first downlink signal and the second downlink signal are downlink signals in the X downlink signals, the first downlink signal is a downlink signal determined based on an output of a first prediction model, an input of the first prediction model is determined based on Y pieces of downlink measurement information in the X pieces of downlink measurement information, the second downlink signal is determined based on the X pieces of downlink measurement information, and Y is an integer less than or equal to X and greater than 0; and
   sending first information or second information to the access network device based on the first downlink signal and the second downlink signal, wherein the first information indicates that the first prediction model needs to be updated, or the first information indicates the second downlink signal and the Y pieces of downlink measurement information; and the second information indicates that the first prediction model is trusted, or the second information indicates that the first prediction model does not need to be updated, or the second information indicates that the second information does not comprise the Y pieces of downlink measurement information.

3. The method according to claim 1 or 2, comprising sending the second information to the access network device if the first downlink signal and the second downlink signal meet a second condition, wherein the second information indicates the second downlink signal, or the second information indicates that the first prediction model does not need to be updated.

4. The method according to claim 1, 2, or 3, wherein the first condition comprises:
   difference information between the first downlink signal and the second downlink signal is greater than a first threshold.

5. The method according to claim 3 or 4, wherein the second condition comprises:

   the first downlink signal and the second downlink signal are an identical downlink signal; or
   the first downlink signal and the second downlink signal are not an identical downlink signal, but the difference information between the first downlink signal and the second downlink signal is less than or equal to the first threshold.

6. The method according to claim 4 or 5, wherein the difference information between the first downlink signal and the second downlink signal comprises an absolute value of a difference between first downlink measurement information corresponding to the first downlink signal and second downlink measurement information corresponding to the second downlink signal.

7. The method according to any one of claims 1 to 6, wherein the method further comprises:

   training the first prediction model based on the Y pieces of downlink measurement information and the second downlink signal, to obtain a second prediction model; and
   sending third information to the access network device, wherein the third information indicates the second prediction model, or indicates information about the second prediction model.

8. The method according to claim 7, wherein the sending third information to the access network device comprises: sending the third information to the access network device when variation information between the second prediction model and the first prediction model is greater than or equal to a second threshold.

9. The method according to claim 7 or 8, wherein the information about the second prediction model comprises the variation information between the second prediction model and the first prediction model.

10. The method according to any one of claims 1 to 6, wherein the method further comprises:

    receiving fourth information from the access network device, wherein the fourth information indicates information about a third prediction model; and
    updating the first prediction model to the third prediction model.

11. The method according to claim 10, wherein the third prediction model is obtained by training the first prediction model based on the Y pieces of downlink measurement information and the second downlink signal.

12. The method according to any one of claims 1 to 11, wherein the first prediction model is the same as a prediction model configured in the access network device.

13. The method according to any one of claims 1 to 12, wherein the first prediction model is agreed on in a protocol, or is configured by the access network device.

14. A communication method, comprising:

    sending X downlink signals to a terminal device, wherein X is an integer greater than 1; and
    receiving first information from the terminal device, wherein the first information indicates a second downlink signal and Y pieces of downlink measurement information in X pieces of downlink measurement information, or the first information indicates that a first prediction model needs to be updated; and
    the second downlink signal is determined based on the X pieces of downlink measurement information, the X pieces of downlink measurement information are determined based on the X downlink signals, and Y is an integer less than or equal to X and greater than 0.

15. A communication method, comprising:

    sending X downlink signals to a terminal device, wherein X is an integer greater than 1; and
    receiving first information or second information from the terminal device, wherein the first information indicates a second downlink signal and Y pieces of downlink measurement information in X pieces of downlink measurement information, or the first information indicates that a first prediction model needs to be updated; the second information indicates the second downlink signal, or the second information indicates that the first prediction model does not need to be updated; and the second downlink signal is determined based on the X pieces of downlink measurement information, the X pieces of downlink measurement information are determined based on the X downlink signals, and Y is an integer less than or equal to X and greater than 0.

16. The method according to claim 14 or 15, wherein
a first downlink signal and the second downlink signal meet a first condition, the first downlink signal and the second downlink signal are downlink signals in the X downlink signals, the first downlink signal is a downlink signal determined based on an output of the first prediction model, and an input of the first prediction model is determined based on the Y pieces of downlink measurement information in the X pieces of downlink measurement information.

17. The method according to claim 14, 15, or 16, comprising:
receiving second information from the terminal device, wherein the second information indicates the second downlink signal, or the second information indicates that the first prediction model does not need to be updated.

18. The method according to claim 17, wherein the first downlink signal and the second downlink signal meet a second condition.

19. The method according to claim 15 or 16, wherein the first condition comprises:
difference information between the first downlink signal and the second downlink signal is greater than a first threshold.

20. The method according to claim 18, wherein the second condition comprises:

the first downlink signal and the second downlink signal are an identical downlink signal; or
the first downlink signal and the second downlink signal are not an identical downlink signal, but difference information between the first downlink signal and the second downlink signal is less than or equal to a first threshold.

21. The method according to claim 19 or 20, wherein the difference information between the first downlink signal and the second downlink signal comprises an absolute value of a difference between first downlink measurement information corresponding to the first downlink signal and second downlink measurement information corresponding to the second downlink signal.

22. The method according to any one of claims 14 to 21, wherein the method further comprises:

training the first prediction model based on the Y pieces of downlink measurement information and the second downlink signal, to obtain a third prediction model; and
sending fourth information to the terminal device, wherein the fourth information indicates the third prediction model, or indicates information about the third prediction model.

23. The method according to claim 22, wherein the information about the third prediction model comprises variation information between the third prediction model and the first prediction model.

24. The method according to any one of claims 14 to 21, wherein the method further comprises:

receiving third information from the terminal device, wherein the third information indicates information about a second prediction model; and
updating the first prediction model to the second prediction model.

25. The method according to any one of claims 14 to 24, wherein the first prediction model is the same as a prediction model configured in the terminal device.

26. A communication method, comprising:

sending X downlink signals to a terminal device, and receiving X pieces of downlink measurement information from the terminal device, wherein the X pieces of downlink measurement information are determined based on the X downlink signals, and X is an integer greater than 1;
determining a first downlink signal and a second downlink signal, wherein the first downlink signal and the second downlink signal are downlink signals in the X downlink signals, the first downlink signal is a downlink signal determined based on an output of a first prediction model, an input of the first prediction model is determined based on Y pieces of downlink measurement information in the X pieces of downlink measurement information, the second downlink signal is determined based on the X pieces of downlink measurement information, and Y is an integer less than or equal to X and greater than 0;

training the first prediction model based on the Y pieces of downlink measurement information and the second downlink signal if the first downlink signal and the second downlink signal meet a first condition, to obtain a third prediction model; and

updating the first prediction model to the third prediction model.

27. The method according to claim 26, wherein the first condition comprises: difference information between the first downlink signal and the second downlink signal is greater than a first threshold.

28. The method according to claim 26 or 27, wherein if the first downlink signal and the second downlink signal meet a second condition, the first prediction model is kept unchanged; and

the second condition comprises: the first downlink signal and the second downlink signal are an identical downlink signal; or the first downlink signal and the second downlink signal are not an identical downlink signal, and the difference information between the first downlink signal and the second downlink signal is less than or equal to the first threshold.

29. The method according to claim 28, wherein the difference information between the first downlink signal and the second downlink signal comprises an absolute value of a difference between first downlink measurement information corresponding to the first downlink signal and second downlink measurement information corresponding to the second downlink signal; or

the difference information between the first downlink signal and the second downlink signal comprises an absolute value of a difference between first position information corresponding to the first downlink signal and second position information corresponding to the second downlink signal.

30. A communication method, comprising:

receiving X uplink signals from a terminal device, and determining X pieces of uplink measurement information based on the X uplink signals, wherein X is an integer greater than 1;

determining a first uplink signal and a second uplink signal, wherein the first uplink signal and the second uplink signal are uplink signals in the X uplink signals, the first uplink signal is an uplink signal determined based on an output of a fourth prediction model, an input of the fourth prediction model is determined based on Y pieces of uplink measurement information in the X pieces of uplink measurement information, the second uplink signal is determined based on the X pieces of uplink measurement information, and Y is an integer less than X and greater than 0;

training the fourth prediction model based on the Y pieces of uplink measurement information and the second uplink signal if the first uplink signal and the second uplink signal meet a third condition, to obtain a fifth prediction model; and

updating the fourth prediction model to the fifth prediction model.

31. The method according to claim 30, wherein the third condition comprises: difference information between the first uplink signal and the second uplink signal is greater than a third threshold.

32. The method according to claim 30 or 31, wherein if the first uplink signal and the second uplink signal meet a fourth condition, the fourth prediction model is kept unchanged; and

the fourth condition comprises: the first uplink signal and the second uplink signal are an identical uplink signal; or the first uplink signal and the second uplink signal are not an identical uplink signal, but the difference information between the first uplink signal and the second uplink signal is less than or equal to the third threshold.

33. The method according to claim 32, wherein the difference information between the first uplink signal and the second uplink signal comprises an absolute value of a difference between first uplink measurement information corresponding to the first uplink signal and second uplink measurement information corresponding to the second uplink signal; or

the difference information between the first uplink signal and the second uplink signal comprises an absolute value of a difference between position information corresponding to the first uplink signal and position information corresponding to the second uplink signal.

**34.** A communication apparatus, configured to implement the method according to any one of claims 1 to 13.

**35.** A communication apparatus, configured to implement the method according to any one of claims 14 to 33.

**36.** A communication apparatus, comprising a processor, wherein the processor is coupled to a memory; and the processor is configured to execute a computer program or instructions stored in the memory, to enable the communication apparatus to implement the method according to any one of claims 1 to 13.

**37.** A communication apparatus, comprising a processor, wherein the processor is coupled to a memory; and the processor is configured to execute a computer program or instructions stored in the memory, to enable the communication apparatus to implement the method according to any one of claims 14 to 33.

**38.** A computer-readable storage medium, storing a computer program or instructions, wherein when the computer program or the instructions are run on a computer, the computer is enabled to implement the method according to any one of claims 1 to 13, or the computer is enabled to implement the method according to any one of claims 14 to 33.

**39.** A computer program product, comprising instructions, wherein when the instructions are run on a computer, the computer is enabled to implement the method according to any one of claims 1 to 13, or the computer is enabled to implement the method according to any one of claims 14 to 33.

**40.** A chip, comprising a processor, wherein the processor is coupled to a memory, and is configured to execute a computer program or instructions stored in the memory, to enable the chip to implement the method according to any one of claims 1 to 33.

**41.** A communication system, comprising a terminal device and an access network device, wherein the terminal device is configured to implement the method according to any one of claims 1 to 13, and the access network device is configured to implement the method according to any one of claims 14 to 33.

AI entity

Network device

Terminal device 1

Terminal device 2

Terminal device 3

FIG. 1

Neuron

Layer

Weight

Input layer

Hidden layer

Output layer

FIG. 2

FIG. 3

FIG. 4(a)

FIG. 4(b)

FIG. 4(c)

FIG. 4(d)

FIG. 5

Input → [Five-layer convolutional layer network] ⊕ [Two-layer fully connected layer network] → Output

FIG. 6

```
┌─────────────────┐                    ┌─────────────────┐
│  Access network │                    │ Terminal device │
│     device      │                    │                 │
└────────┬────────┘                    └────────┬────────┘
         │   S700: Indication information        │
         ├──────────────────────────────────────▶│
         │      S701: X downlink signals          │
         ├──────────────────────────────────────▶│
```

S702: The terminal device determines X pieces of downlink measurement information based on the X downlink signals

Non-check mode

S703: X pieces of downlink measurement information

S704: The access network device determines a first optimal downlink signal based on the X pieces of downlink measurement information

Check mode

S705: The terminal device determines a first downlink signal and a second downlink signal

S706: First information

S707: Second information

S708: The terminal device trains a first prediction model based on Y pieces of downlink measurement information and the second downlink signal, to obtain a second prediction model

S709: Third information

S710: The access network device updates the first prediction model to the second prediction model based on the third information

FIG. 7

FIG. 8

FIG. 9

S1001: A terminal device trains a to-be-updated prediction model, to obtain an updated prediction model

S1002: The terminal device determines variation information between the updated prediction model and an initially updated prediction model

Is the variation information greater than or equal to a second threshold?

S1003: If the variation information is greater than or equal to the second threshold, the terminal device sends third information to an access network device

S1004: If the variation information is less than the second threshold, the terminal device does not send third information

FIG. 10

```
┌─────────────────────┐                              ┌─────────────────────┐
│   Access network    │                              │   Terminal device   │
│       device        │                              │                     │
└─────────────────────┘                              └─────────────────────┘
┌─────────────────────────────────────┐                        │
│ S1100: The access network device    │                        │
│ sends indication information to the  │                        │
│ terminal device                      │                        │
└─────────────────────────────────────┘                        │
            │           Indication information                  │
            │─────────────────────────────────────────────────▶│
┌─────────────────────────────────────┐                        │
│ S1101: The access network device    │                        │
│ sends X downlink signals to the      │                        │
│ terminal device, and receives X      │                        │
│ pieces of downlink measurement       │                        │
│ information from the terminal device │                        │
└─────────────────────────────────────┘                        │
            │           X downlink signals                      │
            │─────────────────────────────────────────────────▶│
            │  X pieces of downlink measurement information      │
            │◀─────────────────────────────────────────────────│
┌─────────────────────────────────────┐                        │
│ S1102: The access network device    │                        │
│ receives the X pieces of downlink    │                        │
│ measurement information from the     │                        │
│ terminal device                      │                        │
└─────────────────────────────────────┘                        │
┌─────────────────────────────────────┐                        │
│ S1103: The access network device    │                        │
│ determines a first downlink signal   │                        │
│ and a second downlink signal         │                        │
└─────────────────────────────────────┘                        │
┌─────────────────────────────────────┐                        │
│ S1104: If the first downlink signal  │                        │
│ and the second downlink signal meet  │                        │
│ a first condition, the access        │                        │
│ network device trains a first        │                        │
│ prediction model based on Y pieces   │                        │
│ of downlink measurement information  │                        │
│ and the second downlink signal, to   │                        │
│ obtain a third prediction model      │                        │
└─────────────────────────────────────┘                        │
┌─────────────────────────────────────┐                        │
│ S1105: If the first downlink signal  │                        │
│ and the second downlink signal meet  │                        │
│ a second condition, the access       │                        │
│ network device keeps the first       │                        │
│ prediction model unchanged           │                        │
└─────────────────────────────────────┘                        │
```

FIG. 11

Access network
device

Terminal device

S1200: The access network device sends
mode indication information to the
terminal device

Mode indication information

S1201: The terminal device sends X
uplink signals to the access network
device

X uplink signals

S1202: The access network device
receives the X uplink signals from the
terminal device, and determines X
pieces of uplink measurement
information based on P uplink signals

S1203: The access network device
determines a first uplink signal and a
second uplink signal

S1204: If the first uplink signal and the
second uplink signal meet a third
condition, the access network device
trains a fourth prediction model based on
Y pieces of uplink measurement
information and the second uplink signal,
to obtain a fifth prediction model

S1205: If the first uplink signal and the
second uplink signal meet a second
condition, the access network device
keeps the fourth prediction model
unchanged

FIG. 12

1300

1301

Processing unit

1302

Communication
unit

FIG. 13

Communication apparatus 1400

Processor 1410

Interface circuit
1420

Memory 1430

FIG. 14

## INTERNATIONAL SEARCH REPORT

International application No.

**PCT/CN2022/133822**

### A. CLASSIFICATION OF SUBJECT MATTER

H04W 72/04(2009.01)i

According to International Patent Classification (IPC) or to both national classification and IPC

### B. FIELDS SEARCHED

Minimum documentation searched (classification system followed by classification symbols)

H04W, H04L, H04B, H04Q 7/-

Documentation searched other than minimum documentation to the extent that such documents are included in the fields searched

Electronic data base consulted during the international search (name of data base and, where practicable, search terms used)

CNABS, CNTXT, CNKI, VEN, WOTXT, USTXT, EPTXT, 3GPP: 信号, 测量, 最优, 最好, 最佳, 预测, 模型, 神经网络, 人工智能, 机器学习, 更新; signal, measurement, optimum, best, predict, model, neural network, artificial intelligence, AI, machine learning, update

### C. DOCUMENTS CONSIDERED TO BE RELEVANT

| Category* | Citation of document, with indication, where appropriate, of the relevant passages | Relevant to claim No. |
|---|---|---|
| A | CN 112886996 A (BEIJING SAMSUNG COMMUNICATION TECHNOLOGY RESEARCH CO., LTD. et al.) 01 June 2021 (2021-06-01) description, paragraphs [0174]-[0187] and [0284]-[0301], and figures 1 and 11-14 | 1-41 |
| A | CN 113055981 A (SONY CORPORATION) 29 June 2021 (2021-06-29) entire document | 1-41 |
| A | CN 111953448 A (NTT DOCOMO INC.) 17 November 2020 (2020-11-17) entire document | 1-41 |
| A | WO 2021029889 A1 (GOOGLE L.L.C.) 18 February 2021 (2021-02-18) entire document | 1-41 |
| A | US 2021342687 A1 (GOOGLE L.L.C.) 04 November 2021 (2021-11-04) entire document | 1-41 |

☐ Further documents are listed in the continuation of Box C. ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **27 December 2022** | **12 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/133822**

| Patent document<br>cited in search report | | | Publication date<br>(day/month/year) | Patent family member(s) | | | Publication date<br>(day/month/year) |
|---|---|---|---|---|---|---|---|
| CN | 112886996 | A | 01 June 2021 | None | | | |
| CN | 113055981 | A | 29 June 2021 | None | | | |
| CN | 111953448 | A | 17 November 2020 | None | | | |
| WO | 2021029889 | A1 | 18 February 2021 | US | 2021342687 | A1 | 04 November 2021 |
| | | | | EP | 4014166 | A1 | 22 June 2022 |
| | | | | JP | 2022544096 | A | 17 October 2022 |
| US | 2021342687 | A1 | 04 November 2021 | WO | 2021029889 | A1 | 18 February 2021 |
| | | | | EP | 4014166 | A1 | 22 June 2022 |
| | | | | JP | 2022544096 | A | 17 October 2022 |

Form PCT/ISA/210 (patent family annex) (January 2015)

**REFERENCES CITED IN THE DESCRIPTION**

**Patent documents cited in the description**

- CN 202111404979